# EUROPÄISCHE PATENTSCHRIFT

(11) **EP 2 274 819 B1**
(45) Veröffentlichungstag und Bekanntmachung des Hinweises auf die Patenterteilung: **05.04.2017**
(21) Anmeldenummer: 08749945.5
(22) Anmeldetag: 30.04.2008
(51) Int. Cl.: H02K 7/09, F16C 32/04

(54) **ROTATIONSMASCHINE, VERFAHREN ZUR BESTIMMUNG EINER VERKIPPUNG EINES ROTORS EINER ROTATIONSMASCHINE, SOWIE BEARBEITUNGSANLAGE**
ROTATION MACHINE, METHOD FOR DETERMINING A TIPPING OF A ROTOR OF A ROTATION MACHINE, AND MACHINING SYSTEM
MACHINE TOURNANTE, PROCÉDÉ POUR DÉTERMINER UN BASCULEMENT DE ROTOR D'UNE MACHINE TOURNANTE ET INSTALLATION DE TRAITEMENT

(43) Veröffentlichungstag der Anmeldung: 19.01.2011
(73) Patentinhaber: Levitronix GmbH, 8005 Zürich (CH)
(72) Erfinder: NUSSBAUMER; Thomas, Dr., 8004 Zürich (CH)
(74) Vertreter: Intellectual Property Services GmbH
(86) Internationale Anmeldenummer: PCT/EP2008/055367
(87) Internationale Veröffentlichungsnummer: WO 2009/132707

(56) Entgegenhaltungen:
- EP-A- 0 982 836
- EP-A- 1 063 753
- WO-A-98/11650
- DE-A1- 3 819 205
- US-A- 3 845 995
- US-A- 6 071 093

## Beschreibung

Die Erfindung betrifft eine als lagerloser Motor ausgestaltete Rotationsmaschine, ein Verfahrung zur Bestimmung einer Verkippung eines Rotors einer Rotationsmaschine, sowie eine Bearbeitungsanlage, insbesondere Wafer Bearbeitungsanlage, Bioreaktoranlage, Pumpe oder Mischer gemäss dem Oberbegriff des unabhängigen Anspruchs der jeweiligen Kategorie.

Insbesondere betrifft die Erfindung eine Rotationsmaschine für eine Vorrichtung und ein Verfahren zum Rotationsbeschichten einer Oberfläche eines Wafers mit einer Polymerflüssigkeit, speziell mit einem Photoresist.

In der Halbleitertechnologie und in der Mikroelektronik wird - beispielsweise bei der Herstellung integrierter Schaltkreise - das Verfahren des Rotationsbeschichtens (spin-coating) angewendet, um mittels eines Fluids eine Schicht auf der Oberfläche eines Substrats herzustellen.

Zum Herstellen integrierter Schaltkreise oder mikroelektronischer Strukturen ist es notwendig, geometrische Formen wie z.B. Leiterbahnen auf den Wafer zu übertragen. Dies geschieht in aller Regel mit Hilfe eines lithographischen Prozesses, bei dem zunächst eine dünne Schicht eines Photoresists (auch als Photolack bezeichnet) auf die Oberfläche des Wafers aufgebracht wird. Nach deren Trocknung wird durch Beaufschlagung dieser Schicht mit elektromagnetischer Strahlung - üblicherweise UV-Licht - durch eine Maske hindurch die gewünschte geometrische Struktur aufbelichtet. Dort, wo die Maske die Photoresistschicht nicht abdeckt, wird deren Löslichkeit durch die Strahlung entweder erhöht (Positivlack) oder erniedrigt (Negativlack), sodass im anschliessenden Bearbeitungsschritt entweder die bei der Belichtung nicht abgedeckten Bereiche oder die abgedeckten Bereiche herausgelöst werden.

Beim Rotationsbeschichten wird die Schicht auf der Oberfläche des Wafers generiert, indem der Wafer auf einem Drehteller (Chuck) angeordnet wird, der Drehteller in Rotation versetzt wird und dann mittels einer Dosiereinrichtung über dem Zentrum des Wafers eine vorgebbare Menge einer Polymerflüssigkeit, die ausser dem Polymer ein Lösungsmittel enthält, aufgebracht wird. Durch die Rotation des Drehtellers, die üblicherweise mit 100 bis 6000 Umdrehungen pro Minute erfolgt, verteilt sich die Polymerflüssigkeit als dünne Schicht auf der Waferoberfläche. Um eine feste Schicht zu erzeugen, muss anschliessend das Lösungsmittel entfernt werden, was durch Rotieren - typischerweise bei geringeren Drehzahlen - oder Heizen des Wafers bzw. der Prozesskammer unterstützt werden kann. Derartige Prozesse sind beispielsweise in der US-A-6,662,466 oder in der US-A-2004/0009295 offenbart.

Ein wesentlicher Aspekt bei der Herstellung der Photoresistschichten ist es, dass die Variationen in der Schichtdicke über die gesamte Waferoberfläche gesehen möglichst klein gehalten werden sollen. Dies liegt unter anderem daran, dass man aufgrund der extrem kleinen Strukturen, die auf den Wafer belichtet werden, möglichst kurzwelliges Licht verwendet, wodurch die Tiefenschärfe bei der Belichtung sehr klein ist, beispielsweise 150 nm.

Zudem ist man bemüht, die Schichten sehr dünn zu gestalten und den Photoresist möglichst effizient zu verwenden, weil es sich hierbei um relativ teure Substanzen handelt. Ein Wegschleudern von Photoresist von der Waferoberfläche soll möglichst weitgehend vermieden werden. Daher ist man bemüht, die Parameter, welche die Dicke der erzielten Schicht beeinflussen, möglichst genau einzustellen. Diese Parameter umfassen die Rotationsgeschwindigkeit des Drehtellers, die Temperatur des Wafers und die Viskosität der Polymerflüssigkeit, um nur einige zu nennen.

Als Antrieb für solche Einrichtungen bietet sich ein sogenannter lagerloser Motor an, der einen als Lager- und Antriebsstator ausgestalteten Stator und einen innerhalb des Stators magnetisch berührungslos gelagerten magnetischen Rotor umfasst. Solche Motoren sind seit längerem bekannt und kommen wegen ihrer besonderen Vorteile, nämlich vor allem wegen ihrer stabilen Laufeigenschaften und dem Fehlen eines jeglichen mechanischen Lagers am Rotor, vor allem in vielen Spezielanwendungen als Pumpen oder Dosiereinrichtungen, z.B. in der Halbleiterindustrie zur Handhabung von mechanisch aggressiven Flüssigkeiten wie Slurry immer mehr zum Einsatz. Beispielsweise ist ein solcher Drehantrieb in der EP 1 063 753 beschrieben.

Ein anderes klassisches Anwendungsgebiet solcher lagerloser Motoren ist die Behandlung empfindlicher oder hochreiner Flüssigkeiten. So wird die Technik der lagerlosen Motoren zum Beispiel sehr vorteilhaft in Blutpumpen oder in Bioreaktoren verwendet, oder zur Handhabung hochempfindlicher bzw. hochreiner Flüssigkeiten in der pharmazeutischen und chemischen Industrie, sowie allgemein in der Medizin bzw. der medizinischen Technik eingesetzt.

Die Krafterzeugung zur magnetischen Lagerung der lagerlosen Motoren in Scheibenläufer-Ausführung gemäss EP 1 063 753 erfolgt dabei nur in einer Ebene, nämlich in der Ebene des Rotors. Der Rotor wird in dieser Ebene in beide Radialrichtungen aktiv stabilisiert, wobei die Stabilisierung in Axialrichtung und die Stabilisierung der Verkippungsneigung bei den bekannten Motoren rein passiv durch Reluktanzkräfte erfolgt.

Die aktive Regelung der Position in jede der beiden Radialrichtungen des Rotors erfolgt mittels mindestens eines am Statorumfang angebrachten Sensors pro Richtung, der die Distanz des Rotors am Stator misst. Alternativ ist es möglich, aus Gründen verbesserter Linearität oder Auflösung auch zwei oder mehr Sensoren pro Richtung zu platzieren, wobei je nach Platzierung in dem Fachmann bekannter Weise durch Differenz- und / oder Summenbildung die Position in ebendiese Richtung ermittelt wird.

Eine Bewegung des Rotors von der Sollposition des Rotors in eine bestimmte Richtung, z.B. durch eine Störeinwirkung, führt dann zum Beispiel zu einer Verkleinerung des Signals am Distanzsensor, was dann zu einer Abschwächung des Feldes im Luftspalt auf ebendieser Seite und was dann zu einer Verstärkung des Feldes auf der gegenüberliegenden Seite durch entsprechend geregelte stromdurchflossene und felderzeugende Spulen führt. Dies bewirkt eine Bewegung des Rotors in Richtung zur Sollposition und somit eine aktive radiale Stabilisierung.

Eine geringfügige axiale Verkippung des Rotors, z.B. durch eine Störeinwirkung, kann ebenfalls zu einer Änderung des Sensorsignals führen, was von der Regelung als Änderung der Radialposition interpretiert wird.

Derartige geringfügige Verkippungen des Rotors waren bisher bei den bekannten lagerlosen Motoren kein wesentliches Problem, da diese Verkippungen durch die zwischen Stator und Rotor herrschenden Reluktanzkräfte im Zusammenspiel mit weiteren dämpfend wirkenden Mechanismen, wie zum Beispiel den viskosen Eigenschaften der Flüssigkeit, in der sich der Rotor bewegt, automatisch gedämpft wurden.

Es hat sich jedoch gezeigt, dass unter bestimmten Umständen diese automatischen Dämpfungsmechanismen nicht mehr, oder zumindest nicht mehr ausreichend greifen.

So wäre es zum Beispiel wünschenswert eine Beschichtungsanlage zum Rotationsbeschichten eines Wafers, wie sie eingangs kurz beschrieben wurde, derart auszugestalten, dass der rotierende Tragkörper, der beim Rotationsbeschichten den Wafer trägt, nicht in komplizierter Weise mit einem Antrieb verbunden ist, sondern der rotierende Tragkörper selbst gleichzeitig den Rotor eines entsprechenden lagerlosen Motors bildet.

In der Praxis haben die zu beschichtenden Wafer zum Beispiel Durchmesser von bis zu 300mm oder mehr. Zudem muss in dem Fall, dass der Tragkörper selbst den Rotor des lagerlosen Motors bildet, eine relativ grosse Masse haben, damit der Tragkörper äusseren Störungen auf seine Gleichgewichtslage eine genügend grosse Trägheit entgegensetzt, so dass ein genügend stabiler Lauf des Rotors im Betriebszustand gewährleistet ist.

Eine verhältnismässig grosse Masse des Tragkörpers und damit des Rotors führt dazu, dass die Gewichtskraft des Rotors nicht mehr klein gegen die wirkenden magnetischen Reluktanzkräfte ist, so dass der Rotor im Gleichgewichtszustand in Bezug auf den Stator einen gewissen Versatz in Richtung der auf den Rotor wirkenden Schwerkraft erfährt.

Es hat sich nun herausgestellt, dass dies zur Folge hat, dass in bestimmten Fällen auch kleine Störungen, die zunächst nur zu einer geringen Verkippung des Rotors führen, durch die radiale aktive Regelung derart verstärkt werden können, dass der Rotor im schlimmsten Fall aus dem Stator herausgeschleudert wird, bzw. die Verkippung nicht mehr stabilisierbar ist. Das führt natürlich im Allgemeinen zu schweren Beschädigungen an der Rotationsmaschine selbst und an den Anlagen, in denen die Rotationsmaschine als Antrieb verwendet wird.

Ausgehend vom Stand der Technik ist es daher eine Aufgabe der Erfindung, eine Rotationsmaschine, eine Vorrichtung mit einer Rotationsmaschine und ein Verfahren zum Betreiben einer Rotationsmaschine, im Speziellen eine Vorrichtung und ein Verfahren zum Rotationsbeschichten einer Oberfläche eines Substrats, insbesondere eines Wafers vorzuschlagen, bei welchem ein stabiler Lauf des Rotors in Bezug auf Verkippungsbewegungen auch dann garantiert ist, wenn der Rotor eine so grosse Masse hat, dass sein Gewicht im Vergleich zu den zwischen Stator und Rotor wirkenden Reluktanzkräften nicht mehr vernachlässigbar ist. Insbesondere soll die Vorrichtung und das Verfahren auch, aber nicht nur, für das Beschichten einer Oberfläche eines Wafers mit einer Polymerflüssigkeit, speziell mit einem Photoresist, geeignet sein.

Die diese Aufgaben in apparativer und verfahrenstechnischer Hinsicht lösenden Gegenstände der Erfindung sind durch die unabhängigen Ansprüche der jeweiligen Kategorie gekennzeichnet.

Die jeweiligen abhängigen Ansprüche beziehen sich auf besonders vorteilhafte Ausführungsformen der Erfindung.

Erfindungsgemäss wird somit eine als lagerloser Motor ausgestaltete Rotationsmaschine, umfassend einen als Lager- und Antriebsstator ausgestalteten Stator mit einer magnetischen Statorebene, und einen innerhalb des Stators magnetisch berührungslos gelagerten magnetischen Rotor mit einer magnetischen Rotorebene vorgeschlagen, wobei eine axiale Höhe des Rotors kleiner oder gleich einem halben Durchmesser des Rotors ist, und der Rotor in Bezug auf die magnetische Statorebene sowohl gegen eine axiale Verschiebung als auch gegen eine Verkippung aus einer Gleichgewichtslage passiv durch Reluktanzkräfte stabilisiert ist. Am Stator ist eine Sensoreinrichtung mit einem ersten Sensor und einem zweiten Sensor derart vorgesehen, dass zur Bestimmung einer Auslenkung des Rotors aus der Gleichgewichtslage ein erstes Sensorsignal aus einer ersten Messzone des Rotors mittels des ersten Sensors und ein zweites Sensorsignal aus einer zweiten Messzone des Rotors mittels des zweiten Sensors auswertbar ist. Erfindungsgemäss ist zur Bestimmung der Verkippung des Rotors gegen die magnetische Statorebene eine erste Steuermesszone, die ein Teil der ersten Messzone ist, entweder unterhalb oder oberhalb der magnetischen Rotorebene derart am Rotor vorgesehen, dass mindestens 50% des aus der ersten Messzone generierbaren ersten Sensorsignals durch die erste Steuermesszone am ersten Sensor generierbar ist.

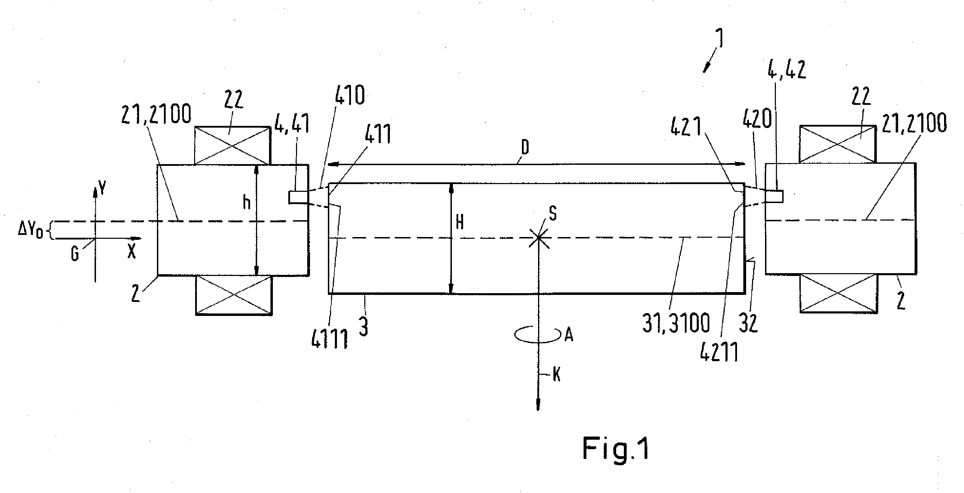

Um zu einer klareren Darstellung der Erfindung zu gelangen, werden im Folgenden anhand der Fig. 1 bis 8b die wesentlichen Merkmale der erfindungsgemässen Rotationsmaschine und deren geometrische Ausgestaltung in schematischer Weise kurz erläutert.

Fig. 1 zeigt in einer schematischen Darstellung ein einfaches Ausführungsbeispiel einer erfindungsgemässen Rotationsmaschine, die im folgenden gesamthaft mit dem Bezugszeichen 1 bezeichnet wird und bei welcher sich der Rotor in der Gleichgewichtslage befindet.

Die erfindungsgemässe Rotationsmaschine 1 ist als lagerloser Motor ausgestaltet, der einen als Lager- und Antriebsstator ausgestalteten Stator 2 und einen innerhalb des Stators 2 magnetisch berührungslos gelagerten magnetischen Rotor 3 umfasst.

Dabei ist im Rahmen dieser Anmeldung unter einem lagerlosen Motor ein Motor zu verstehen, der einen elektromagnetischen Drehantrieb bildet und der einen magnetischen, bevorzugt permanentmagnetisch erregten Rotor 3 und einen Stator 2 umfasst, wobei der Rotor 3 mittels magnetischer Kräfte berührungslos gelagert ist. Das Charakteristikum, dem der lagerlose Motor seine Bezeichnung verdankt, ist, dass er keine separaten Magnetlager für den Rotor 3 aufweist. Dazu ist der Stator 2 als Lager- und Antriebsstator und der Rotor 3 als passiv magnetischer Rotor 3, der sowohl als Lager- als auch als Antriebsrotor dient, ausgestaltet. Der Stator 2 ist derart ausgestaltet bzw. mit elektrischen Wicklungen 22 versehen, dass er ein elektromagnetisches Drehfeld erzeugt, welches zum einen ein Drehmoment auf den Rotor 3 ausübt, das dessen Rotation um die Drehachse A antreibt, und welches zum anderen eine beliebig einstellbare Querkraft auf den Rotor 3 ausübt, sodass dessen radiale Position bezüglich einer zur Drehachse A senkrechten Ebene vorgebbar bzw. aktiv steuerbar ist. Somit ist der Rotor 3 im Betriebszustand mittels der elektrischen Wicklungen des Stators 2 bezüglich dreier Freiheitsgrade, nämlich der Rotation um die Drehachse sowie der radialen Position in der zur Drehachse senkrechten Ebene (zwei Freiheitsgrade) aktiv ansteuerbar bzw. antreibbar.

Bezüglich dreier weiterer Freiheitsgrade, nämlich Verkippungen bezüglich der zur Drehachse A senkrechten Ebene (zwei Freiheitsgrade) und der axialen Position Y ist der Rotor 3 bei den aus dem Stand der Technik bekannten lagerlosen Motoren passiv magnetisch, das heisst nicht ansteuerbar, durch Reluktanzkräfte stabilisiert. Somit ist der Rotor 3 im Betriebszustand durch die magnetische Wechselwirkung zwischen dem Lager/Antriebsstator 2 und dem Rotor 3 sowohl antreibbar als auch berührungslos lagerbar, ohne dass hierfür separate Magnetlager vorhanden sind.

In diesem Sinne ist im Rahmen dieser Anmeldung der Begriff "lagerloser Motor mit magnetischem Rotor" zu verstehen. Bezüglich weiterer Details der Ausgestaltung und der Ansteuerung bzw. Regelung des lagerlosen Motors sei hier z.B. auf die EP 0 986 162 oder auf die WO-A-96/31934 verwiesen, in welchen ein solcher lagerloser Motor am Beispiel einer Rotationspumpe offenbart ist.

Ein wesentliches Charakteristikum eines solchen lagerlosen Motors ist ein Rotor 3, dessen axiale Höhe H kleiner oder gleich einem halben Durchmesser D des Rotors 3 ist, so dass der Rotor 3 in Bezug auf die magnetische Statorebene 21 sowohl gegen eine axiale Verschiebung ΔY als auch gegen eine Verkippung Δα aus einer Gleichgewichtslage G passiv durch die oben erwähnten Reluktanzkräfte stabilisierbar ist. Die geometrische Anordnung von Stator 2 mit elektrischen Wicklungen 22 und dem innerhalb des Stators 2 angeordneten Rotor 3, dessen Höhe H kleiner ist als sein halber Durchmesser D, ist in Fig. 1 sehr anschaulich dargestellt.

Dabei kann der Rotor 3 unter anderem in Form einer kompakten Scheibe, oder auch als Ring, das heisst mit einer Ausnehmung in Mitte ausgebildet sein. Ein als Ring ausgebildeter Rotor 3 wir besonders bevorzugt auch bei der vorliegenden Erfindung verwendet. Insbesondere bei grossen Rotoren 3 hat die Ausführung des Rotors 3 als Ring neben seinen speziellen magnetischen Eigenschaften vor allem den Vorteil, dass ein solcher ringförmiger Rotor 3 natürlich deutlich weniger Gewicht hat, als ein scheibenförmiger Rotor 3 mit gleichen äusseren Abmessungen, weil beim ringförmigen Rotor 3 eine erhebliche Menge an Material durch die Ausnehmung in der Mitte des Rotors 3 eingespart wird.

Der Rotor der Fig. 1 befindet sich dabei in Bezug auf alle drei Raumrichtungen in der Gleichgewichtslage G. Die relative Lage der drei Raumrichtungen zueinander ist dabei durch die Richtung K der Schwerkraft, die in Fig. 1 darstellungsgemäss nach unten und damit entgegengesetzt zur Raumrichtung Y zeigt, im wesentlichen definiert. Darstellungsgemäss links ist in Fig. 1 ein Koordinatensystem eingeführt, das die relative Lage der Raumrichtungen Y und X, wobei X die beiden gleichberechtigten orthogonalen radialen Richtungen symbolisiert, in Bezug auf die Rotationsmaschine 1 und die Richtung der Schwerkraft K definiert.

Wie deutlich in Fig. 1 zu sehen ist, weist der Rotor 3 in der Gleichgewichtslage G einen gewissen Versatz um die Strecke ΔY₀ in Richtung der Schwerkraft K auf. Dieser Versatz um die Strecke ΔY₀ ist eine Folge der relativ grossen Masse des Rotors 3, die technisch eine nicht zu vernachlässigende Grösse bei einer erfindungsgemässen Rotationsmaschine 1 ist. Das unterscheidet die Rotationsmaschine 1 der vorliegenden Erfindung im übrigen wesentlich von den aus dem Stand der Technik bekannten lagerlosen Motoren, wie sie zum Beispiel in der oben erwähnten EP 0 986 162 oder in der WO-A-96/31934 beschrieben sind.

Selbstverständlich haben auch diese aus dem Stand der Technik bekannten Rotoren eine Masse, die in deren Gleichgewichtslage aufgrund der Schwerkraft im Prinzip zu einem kleinen Versatz in Richtung Schwerkraft führt. Allerdings ist die Schwerkraft, die aufgrund der Masse auf die aus dem Stand der Technik bekannten leichten Rotoren wirkt, im Vergleich zu den Reluktanzkräften, die unter anderem die axiale Position des Rotors stabilisieren, so klein, dass sie für alle praktischen Probleme, die die Stabilisierung des Rotors gegen eine axiale Verschiebung oder Verkippung betreffen, vernachlässigt werden kann. Im Speziellen ist bei den bekannten Rotoren deren Gewicht auch gegen andere Kräfte, die auf den Rotor wirken können, wie zum Beispiel in Bezug auf hydrodynamische Kräfte, die bei einer Pumpe auf den Rotor wirken, ebenfalls vernachlässigbar klein. Daher können solche aus dem Stand der Technik bekannten Rotationsmaschinen in der Regel auch in jeder Lage in Bezug auf die Schwerkraft betrieben werden. Dagegen kann eine erfindungsgemässe Rotationsmaschine, die einen schweren Rotor mit einer in Bezug auf die Reluktanzkräfte nicht vernachlässigbaren Gewichtskraft hat, in der Regel nicht in jeder beliebigen Lage in Bezug auf die Schwerkraft betrieben werden. Es sei denn, die erfindunsggemässe Rotationsmaschine wird unter ganz speziellen Bedingungen, zum Beispiel in einem genügend zähen Medium betrieben, oder auch z.B. wenn die Verkippung der Rotationsmaschine als ganzes gegen die Richtung der Schwerkraft genügend klein ist.

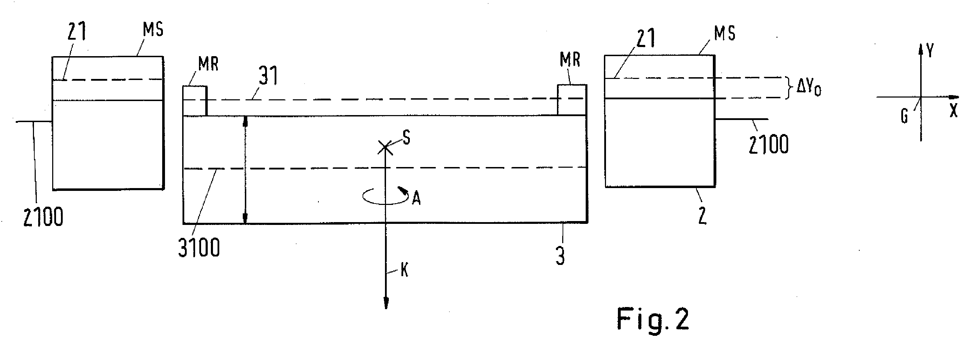

Da die Masse des Rotors 3 einer erfindungsgemässen Rotationsmaschine 1 zu einem nicht vernachlässigbaren Versatz ΔY₀ in Richtung K der Schwerkraft führt, wird bei der vorliegenden Erfindung im Allgemeinen auch eine Unterscheidung zwischen den magnetischen Ebenen des Rotors 3 und des Stators 2 und deren zugehörigen geometrischen Ebenen notwendig. Diese Unterscheidung wird anhand der Fig. 2 noch eingehend erläutert werden.

Bei dem einfachen Beispiel der Fig. 1 sind die magnetische Rotorebene 31 und die geometrische Rotorebene 3100 identisch, weil es sich beim Rotor 3 um einen geometrisch als Rotor 3 ausgestalteten Permanentmagneten handelt. Dadurch fällt die geometrische Rotorebene 3100, die durch die halbe Höhe H der Rotorscheibe des Rotors 3 definiert ist, mit der magnetischen Rotorebene 31 zusammen, die massgeblich für die auf den Rotor 3 wirkenden Reluktanzkräfte ist.

Da der Rotor 3 der Fig. 1 in Bezug auf seine Massenverteilung homogen ausgestaltet ist, liegt zusätzlich der Schwerpunkt S des Rotors 3 auf der magnetischen Rotorebene 31 und der geometrischen Rotorebene 3100. Im Betriebszustand dreht sich der Rotor 3 somit senkrecht zu den Rotorebenen 31, 3100 um die Drehachse A, die durch den Pfeil A symbolisiert ist und senkrecht zu den Rotorebenen 31, 3100 durch den Schwerpunkt S verläuft.

Der Stator 2 der Fig. 1 ist im wesentlichen aus einem ferromagnetischen oder einem permanentmagnetischen Material derart aufgebaut, dass die magnetische Statorebene 21 mit der geometrischen Statorebene 2100, die durch die halbe Höhe h des Stators 2 definiert ist, zusammenfällt. Das ist beispielsweise der Fall, wenn der Stator 2 der Fig. 1 ein homogener Eisenring oder ein Ring aus Eisenblechen ist.

Als wesentliche Einrichtung ist am Stator 2 eine Sensoreinrichtung 4 mit einem ersten Sensor 41 und einem zweiten Sensor 42 derart vorgesehen, dass zur Bestimmung einer Auslenkung des Rotors 3 aus der Gleichgewichtslage G ein erstes Sensorsignal 410 aus einer ersten Messzone 411 des Rotors 3 mittels des ersten Sensors 41 und ein zweites Sensorsignal 420 aus einer zweiten Messzone 421 des Rotors 3 mittels des zweiten Sensors 42 auswertbar ist.

Das heisst, eine erfindungsgemässe Rotationsmaschine 1 umfasst mindestens zwei Messsensoren 41, 42, die messtechnisch bevorzugt ein Sensorenpaar bilden, mit welchem eine Auslenkung des Rotors aus der Gleichgewichtslage G, insbesondere eine Verkippung Δα und eine radiale Verschiebung in Richtung X aus der Gleichgewichtslage G detektierbar ist.

Im Prinzip ist es aus dem Stand der Technik bereits bekannt, am Stator Sensoren vorzusehen, die eine radiale Verschiebung des Rotors in Richtung X aus der Gleichgewichtslage G heraus bestimmen können. Auch zum Beispiel die lagerlosen Motoren gemäss EP 0 986 162 und WO-A-96/31934 haben zwingend solche Sensoren, damit in Bezug auf die radiale Richtung eine stabile Lage des Rotors im Betriebszustand einstellbar bzw. regulierbar ist.

Bei den bekannten lagerlosen Motoren, bei welchen das Gewicht des Rotors wie oben erläutert im wesentlichen vernachlässigt werden kann, spielt auch eine mögliche Kippbewegung des Rotors im Betriebszustand höchstens eine untergeordnete Rolle, da diese im wesentlichen automatisch, z.B. über die Reluktanzkräfte und / oder über hydrodynamische Kräfte, die zum Beispiel durch ein Fluid auf den Rotor wirken, stabilisiert und gedämpft werden. Insbesondere werden bei den bekannten lagerlosen Motoren eventuell im Betriebszustand auftretende Kippbewegungen oder Schwingungen um die magnetische Rotorachse durch die aktive Regelung der radialen Lage des Rotors nicht verstärkt, oder zumindest nicht derart verstärkt, dass der Rotor in Bezug auf die axiale Lage bzw. in Bezug auf die erwähnten Kippbewegungen destabilisiert wird. Somit haben bei den bekannten lagerlosen Motoren Kippbewegungen oder Schwingungen um die magnetische Rotorachse für die Praxis bisher keine Rolle gespielt. Insbesondere spielt es bei dieser Art von lagerlosen Motoren für die Praxis praktisch keine Rolle, an welcher Stelle am Stator die Sensoren zur Stabilisierung der radialen Position des Rotors vorgesehen werden, bzw. aus welchem Bereich des Rotors die Sensoren ihr Messsignal beziehen. Für alle praktischen Anwendungen spielen diese Faktoren keine Rolle. Die radiale Lage des Rotors wird immer stabilisiert, wenn der Sensor nur eine genügend hohe Signalstärke vom Rotor empfängt, wobei es keine Rolle spielt, aus welchem Bereich des Rotors das Signal stammt.

Völlig anders stellt sich die Situation jedoch dar, wenn der Rotor 3 ein nicht zu vernachlässigendes Gewicht hat, wie bei der erfindungsgemässen Rotationsmaschine 1, so dass der Rotor 3 bereits in der Gleichgewichtslage G und ohne dass andere Kräfte als die Reluktanzkräfte und die Schwerkraft K auf den Rotor wirken, einen Versatz um die Strecke ΔY₀ in Richtung der Schwerkraft K erfährt.

Dieser wesentliche Unterschied bezüglich der Stabilität des Rotors gegenüber Kippbewegungen wird dabei unter anderem dadurch hervorgerufen, dass bei den bekannten lagerlosen Motoren die Reluktanzkräfte und / oder die hydrodynamischen Kräfte gross sind im Vergleich zu den Gewichtskräften, die auf den Rotor aufgrund seiner Masse wirken. Ein Rotor, der diese Bedingung erfüllt, wird im Rahmen dieser Anmeldung auch als leichter Rotor bezeichnet. Daher ist es auch problemlos möglich, die bekannten lagerlosen Motoren mit leichten Rotoren in jeder beliebigen Lage und Richtung in Bezug auf die Schwerkraft zu betreiben, da eben im Spiel der wirkenden Kräfte die Gewichtskraft des Rotors für alle praktischen Gesichtspunkte im Zusammenhang mit einer stabilen Lagerung vernachlässigbar klein ist.

Es ist nun eine wesentliche Erkenntnis der vorliegenden Erfindung, dass in dem Fall, in dem die Masse des Rotors 3 nicht vernachlässigbar klein ist, also in dem Fall, dass ein sogenannter schwerer Rotor 3 verwendet wird, es eine erhebliche Rolle spielt, aus welchem Bereich der Umfangsfläche 32 des Rotors 3 der Sensor 41, 42 sein Sensorsignal 410, 420 bezieht.

Es hat sich nämlich überraschend gezeigt, dass bei einem Rotor 3, der aufgrund seiner grossen Masse einen Versatz ΔY₀ in Richtung der Schwerkraft K erfährt, es zu einer völligen Destabilisierung des Rotors 3 im Betriebszustand dadurch kommen kann, dass die Reglung, die die radiale Position in X Richtung des Rotors 3 stabilisieren soll, auftretende Kippschwingungen in Bezug auf die magnetische Statorebene 21 nicht dämpft sondern sogar noch verstärkt und zwar je nach dem, aus welchem Bereich der Umfangsfläche 32 des Rotors 3 der Sensor 41, 42 sein Sensorsignal 410, 420 erhält.

So konnte erstmals durch die Erfindung gezeigt werden, dass es ganz bestimmte Bereiche an der Umfangsfläche 32 des Rotors 3 gibt, die dem Sensor 41, 42 ein Sensorsignal 410, 420 liefern, das dazu führt, dass eine Kippbewegung des Rotors 3 nicht weiter verstärkt wird, sondern durch die aktive magnetische radiale Regelung gedämpft wird, so dass der Rotor 3 auch bezüglich auftretender Kippbewegungen stabilisierbar ist.

Wird dagegen das Sensorsignal 410, 420 für die aktive magnetische radiale Regelung des Rotors 3 nicht aus den durch die vorliegende Erfindung offenbarten Bereichen der Umfangsfläche 32 des Rotors 3 bezogen, wird eine Kippbewegung des Rotors 3 durch die aktive magnetische radiale Regelung sogar noch verstärkt, und zwar im schlimmsten Fall soweit verstärkt, dass der Rotor 3 aus dem Stator 2 geschleudert wird, was in vielen Fällen zur Zerstörung oder zumindest zur schweren Beschädigung der Rotationsmaschine 1 führen kann.

So konnten durch die vorliegende Erfindung erstmals klare Bedingungen für die Aufnahme bzw. die Herkunft des Sensorsignals 410, 420 definiert werden, unter denen eine Kippbewegung oder Kippschwingung des Rotors 3 durch die Regelung aktiv gedämpft wird, so dass die Lage des Rotors 3 im Betriebszustand auch gegen Kippschwingungen stabilisierbar ist.

Dabei spielt es im übrigen im wesentlichen keine Rolle, an welcher Stelle am Stator 2 der Sensor 41, 42 vorgesehen wird. Es ist allein entscheidend, aus welchen Bereichen der Umfangsfläche 32 des Rotors 3 der Sensor 41, 42 sein Sensorsignal 410, 420 bezieht und in welchem Verhältnis der Sensor 41, 42 Signalintensitäten aus verschiedenen Bereichen des Rotors 3 erhält. Das heisst, es kommt letztendlich auf die "Blickrichtung" des Sensors an. So kann es zum Beispiel möglich sein, dass der Sensor 41, 42 zwar am oberen Rand des Stators 2 aus Gründen einer einfachen Konstruktion angebracht ist, jedoch in Bezug auf die magnetische Statorebene 21 bzw. in Bezug auf die magnetische Rotorebene 31 derart geneigt ist, dass er sein Sensorsignal 410, 420 aus einem Bereich unterhalb der magnetischen Rotorebene 31 bezieht.

Das heisst, der Sensor 41, 42 selbst kann rein geometrisch in Bezug auf die Umfangsfläche 32 des Rotors 3 in einem instabilen Bereich angeordnet sein, wenn er nur derart ausgerichtet ist, dass er sein Sensorsignal 410, 420 aus einem Bereich und mit einer Signalstärke gemäss der vorliegenden Erfindung bezieht.

Um eine aktive Stabilisierung gegen eine Verkippung Δα des Rotors 3 in Bezug auf die magnetische Statorebene 21 zu erreichen, ist daher erfindungsgemäss eine erste Steuermesszone 4111, die ein Teil der ersten Messzone 411 ist, entweder unterhalb oder oberhalb der magnetischen Rotorebene 31 derart am Rotor 3 vorgesehen, dass mindestens 50% des aus der ersten Messzone 411 generierbaren ersten Sensorsignals 410 durch die erste Steuermesszone 4111 am ersten Sensor 41 generierbar ist.

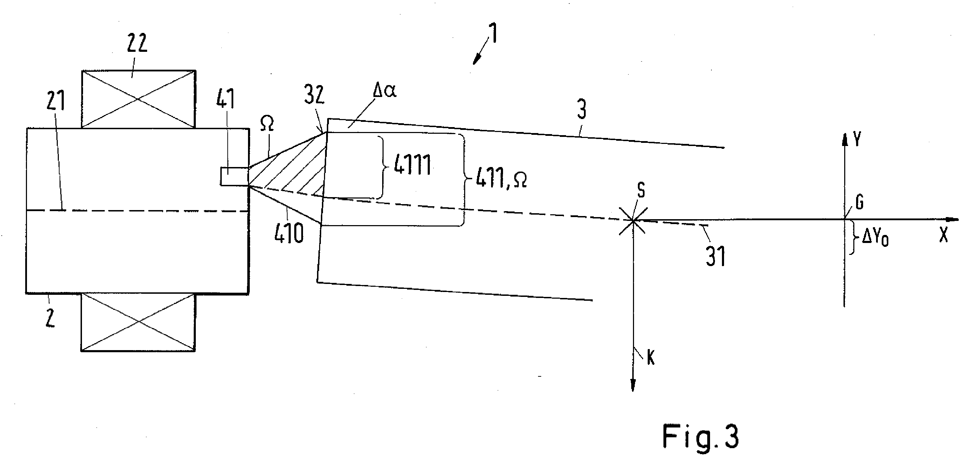

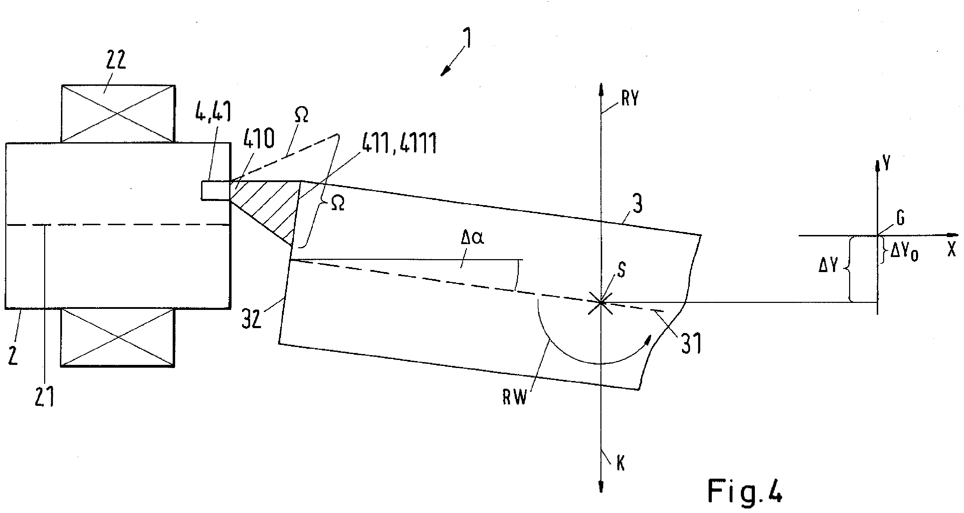

Auf die Bedeutung und Lage der Messzonen 411, 412 bzw. der ersten Steuermesszonen 4111, die dem ersten Sensor 41 zugeordnet ist, und der zweiten Steuermesszone 4211, die dem zweiten Sensor 42 zugeordnet ist, wird anhand der Fig. 3 und Fig. 4 noch näher eingegangen.

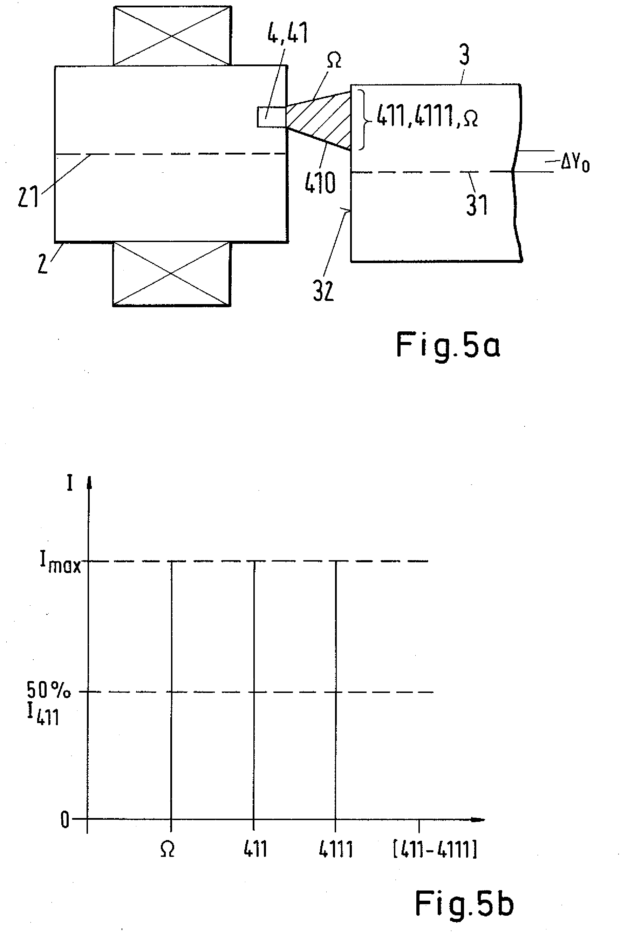

Die Bedeutung der Aussage, dass mindestens 50% des aus der ersten Messzone 411 generierbaren ersten Sensorsignals 410 durch die erste Steuermesszone 4111 am ersten Sensor 41 generiert werden muss, um eine Stabilisierung der Verkippung des Rotors 3 im Betriebszustand zu erreichen, wird anhand der Fig. 5 noch zu erläutern sein.

Anhand der Fig. 2 soll im Folgenden in Kürze noch die Unterscheidung zwischen den magnetischen und geometrischen Ebenen von Stator 2 und Rotor 3 erläutert werden.

In Fig. 2 ist schematisch ein weiteres Ausführungsbeispiel einer erfindungsgemässen Rotationsmaschine 1 dargestellt. Die Spulen 22 zur Erzeugung des aktiven magnetischen Antriebs- und radialen Lagerfeldes sind aus Gründen der Übersichtlichkeit nicht eingezeichnet.

Bei diesem Beispiel handelt es ich um eine Ausführungsform, die durchaus ein gewisse Bedeutung für die Praxis hat. Der Rotor 3 ist, wie in Fig. 1 im Stator 2 in der Gleichgewichtslage G zu sehen. Aufgrund seiner Masse ist der schwere Rotor 3 in Richtung der Gewichtskraft K um die Versatzstrecke ΔY₀ darstellungsgemäss nach unten versetzt.

Sowohl der Rotor 3 als auch der Stator 2 sind bei dem Ausführungsbeispiel der Fig. 2 nicht aus einem permanentmagnetischen Material gefertigt. Der Stator 2 ist zum Beispiel aus einem mehr oder weniger starken ferromagnetischen Material gefertigt, auf welchem zur Erzeugung der passiven Reluktanzkräfze ein Statormagnet MS vorgesehen ist, was zur Folge hat, dass die magnetische Statorebene 21 in Bezug auf die geometrische Statorebene 2100 darstellungsgemäss nach oben zum Statormagneten MS verschoben ist. Der Statormagnet MS kann dabei je nach Ausführungsform zum Beispiel in der radialen Richtung X oder in der axialen Richtung Y polarisiert sein. Es versteht sich dabei, dass, im Gegensatz zu dem einfachen speziellen Beispiel der Fig. 2, die magnetische Statorebene 21 im allgemeinen nicht unbedingt in der geometrischen Mitte des Statormagneten MS liegen muss, zum Beispiel je nach Permeabilität des ferromagnetischen Materials des Stators 2.

Der Rotor 3 ist entweder aus einem magnetischen Material oder aus einem relativ leichten, im wesentlichen nicht oder nur leicht magnetischen Material, z.B. aus Aluminium oder einer Aluminiumlegierung oder aus Messing oder einem anderen Material oder einer anderen Legierung gefertigt auf welchem Rotor 3 der Rotormagnet MR angeordnet ist, der über die Reluktanzkräfte mit dem Statormagneten MS wechselwirkt und den Rotor 3 in axialer Richtung gegen die Gewichtkraft K im Stator 2 stabilisiert. Der Rotormagnet MR kann dabei je nach Ausführungsform zum Beispiel in der radialen Richtung X oder in der axialen Richtung Y polarisiert sein.

Dabei können die Magnete MR, MS z.B. als Ringmagnete MR, MS ausgebildet sein, oder es sind am Rotor 3 eine Vielzahl von einzelnen Rotormagneten MR vorgesehen und / oder es können auch am Stator eine Vielzahl von einzelnen Statormagneten MS vorgesehen sein.

Da der Körper des Rotors 3 im wesentlichen unmagnetisch bzw. nur schwach magnetisch ist, liegt bei diesem Beispiel die magnetische Rotorebene 31 darstellungsgemäss über der geometrischen Rotorebene 3100 und wird hauptsächlich durch die Rotormagnete MR bestimmt.

Beim Beispiel der Fig. 2 ist es dabei sogar so, dass der Rotormagnet MR im Vergleich zum Körper des Rotors 3 ein erhebliches Gewicht hat, so dass der Schwerpunkt S des Rotors 3 insgesamt über, d.h. ausserhalb der geometrischen Rotorachse 3100 zu liegen kommt. Es versteht sich, dass der Schwerpunkt auch unterhalb der geometrische Rotorachse 3100 liegen kann, z.B. wenn der Körper des Rotors 3 nicht homogen aufgebaut ist, und z.B. in einem unteren Bereich aus einem schwereren Material gefertigt ist, als in einem oberen Bereich.

Die wesentliche Erkenntnis, die man anhand der Fig. 2 gewinnt, ist, dass die magnetischen und geometrischen Ebenen von Stator 2 bzw. Rotor 3 keineswegs immer zusammenfallen müssen und dass der Schwerpunkt S des Rotors auch ausserhalb der geometrischen Rotorebene 3100, also darüber oder darunter liegen kann. Das ist letztlich darauf zurückzuführen, dass die geometrische Statorebene 2100 bzw. die geometrische Rotorebene 3100 letztlich einzig über die Geometrie von Stator 2 und Rotor 3 definiert sind, während die magnetische Statorebene 21 bzw. die magnetische Rotorebene 31 massgeblich für die Geometrie der magnetischen Wechselwirkungskräfte, also der Reluktanzkräfte und / oder der aktiven magnetischen Kräfte zwischen Stator 2 und Rotor 3 sind, die der Fachmann zum Beispiel in Form von Vektordiagrammen aus magnetischen Kraft- oder Feldvektoren zu konstruieren weiss. Im übrigen weiss der Fachmann, dass im speziellen die Ebenen der Reluktanzkräfte und der aktiven magnetischen Kräfte zusammenfallen können, im allgemeinen aber nicht immer zusammenfallen müssen.

In den Fig. 3 und Fig. 4 ist das Ausführungsbeispiel der Fig. 1 im Betriebszustand mit einer Verkippung des Rotors ausschnittsweise dargestellt.

Die Fig. 3 und Fig. 4 eignen sich besonders gut, um die Definition der ersten Messzone 411 und der ersten Steuermesszone 4111 bzw. um die relative Lage der ersten Messzone 411 zu der zugehörigen ersten Steuermesszone 4111 zu illustrieren, aus welchen der erste Sensor 41 sein erstes Sensorsignal 410 erhält. Analoges gilt natürlich für die später noch näher diskutierte zweite Messzone 421 und die zugehörige zweite Steuermesszone 4211 des zweiten Sensors 42.

Um die folgende Diskussion etwas zu vereinfachen, sei der erste Sensor 41 ein elektromagnetischer Sensor 41, zum Beispiel ein an sich bekannter induktiver Sensor 41 oder ein Wirbelstromsensor 41, der das erste Sensorsignal 410 aus einer Oberflächenschicht der Umfangsfläche 32 des Rotors 3 erhält.

Es kann sich im konkreten natürlich auch um einen anderen Sensortyp handeln, z.B. einen Sensor 41, der ein Sensorsignal 410, zum Beispiel ein an der Umfangsfläche 32 reflektiertes Sensorsignal 410 empfängt, wie beispielsweise ein optisches oder akustisches Sensorsignal 410, das von einem Signalgeber, der auch der Sensor 42 selbst sein kann, auf die Umfangsfläche gesendet wird und von dieser an den Sensor 42 reflektiert wird.

Im ersten Fall eines elektromagnetischen Sensors 41 ist die Messzone 411 dann ein Messvolumen, im zweiten Fall, in dem das Sensorsignal 410 ein an der Umfangsfläche 32 reflektiertes Sensorsignal 410 ist, ist die Messzone 411 eine Messfläche.

Bei dem in Fig. 3 schematisch dargestellten Betriebszustand der erfindungsgemässen Rotationsmaschine 1 ist die Verkippung Δα des Rotors 3 klein und der Schwerpunkt S ist aufgrund einer Störung zufällig um die Versatzstrecke ΔY = ΔY₀ aus der Gleichgewichtslage G entgegen der Richtung der Schwerkraft K darstellungsgemäss nach oben versetzt. Der erste Sensor 41 ist dabei so am Stator 2 angeordnet, dass die erste Messzone 411 vollständig an der Umfangsfläche 32 des Rotors 3 liegt. Der Versatz ΔY₀ in axialer Richtung aus der Gleichgewichtslage G ist dabei nur ein momentaner Zustand, der durch die Reluktanzkräfte im weiteren Betrieb automatisch wieder rückgängig gemacht wird, so dass sich der Rotor 3 in Bezug auf die axiale Richtung wieder in der Gleichgewichtslage G stabilisieren wird.

Dabei ist die Bedeutung der ersten Messzone 411 im Rahmen dieser Anmeldung so zu verstehen, dass die Messzone 411 denjenigen Raum- bzw. Flächenbereich, oder genauer gesagt denjenigen Raumwinkelbereich Ω definiert, aus dem der Sensor aufgrund seiner Konstruktion und seiner Anordnung prinzipiell in der Lage ist das Sensorsignal 410 zu empfangen. Ein Signal, das ausserhalb des Bereichs Ω stammt, kann der Sensor 41 nicht detektieren.

Dabei ist die geometrische Abgrenzung des Raumwinkelbereichs Ω natürlich technisch und nicht mathematisch zu verstehen.

Das heisst, es ist im Prinzip natürlich möglich, dass der Sensor 41 auch von ausserhalb des Raumwinkelbereichs Ω noch ein verschwindend kleines Signal empfängt. Allerdings, und so ist die Abgrenzung des Raumwinkelbereichs Ω zu verstehen, ist die gesamte Stärke eines Signals, das den Sensor 41 von ausserhalb des Raumwinkelbereichs Ω erreicht, unterhalb der Empfindlichkeitsgrenze des Sensors 41, so dass dieses bestenfalls als Rauschen detektiert wird und nicht als verwertbares Sensorsignal 410.

Bei dem Beispiel der Fig. 3 empfängt der Sensor 41 somit ein Sensorsignal 410 aus dem gesamten möglichen Raumwinkelbereich Ω, da der Sensor 41, mit dem Raumwinkelbereich Ω, bildlich gesprochen, nicht über den Rand des Rotors 3 hinausblickt, wie das bei der stärkeren Verkippung Δα gemäss Fig. 4 der Fall ist. Im Beispiel der Fig. 3 bedecken die erste Messzone 411 und der Raumwinkelbereich Ω somit eine identische Fläche. Im Beispiel der Fig. 4, in dem der Sensor 41 über den Rand des Rotors 3 blickt, sind die vom Raumwinkelbereich Ω und der ersten Messzone 411 abgedeckten Flächen bzw. Raumbereiche nicht mehr identisch.

Das gesamte Sensorsignal 410, das der Sensor 41 insgesamt empfängt setzt sich somit aus einem Anteil zusammen, der aus der Steuermesszone 4111 stammt und einem Rest der zwar aus der Messzone 411 stammt, jedoch nicht aus der Steuermesszone 4111.

Erfindungsgemäss ist die Steuermesszone 4111 im vorliegenden Fall der Fig. 3 oberhalb der magnetischen Rotorebene 31 derart am Rotor 3 vorgesehen, dass im vorliegenden Fall deutlich mehr als 50% des aus der ersten Messzone 411 insgesamt generierten Sensorsignals 410 aus der ersten Steuermesszone 4111 stammt.

Das Beispiel der Fig. 4 unterscheidet sich von dem der Fig. 3 dadurch, dass die Verkippung Δα der magnetischen Rotorebene 31 etwas stärker ist, und durch eine Störung gleichzeitig der Schwerpunkt S des Rotors 3 zusätzlich zum Versatz ΔY₀ in Richtung der Schwerkraft K insgesamt um eine Strecke ΔY versetzt ist, die grösser als der Versatz ΔY₀ in der Gleichgewichtslage G ist. Das führt dazu, dass der Sensor 41 über den Rand des Rotors 3 hinausblickt, was bedeutet, dass der Raumwinkelbereich Ω und die erste Messzone 411 nicht mehr identisch sind, weil ein Teil der vom Raumwinkelbereich Ω abgedeckten Fläche ausserhalb der Umfangsfläche 32 des Rotors 3 liegt, wie der Fig. 4 deutlich zu entnehmen ist. In diesem Fall ist die Steuermesszone 4111 identisch mit der ersten Messzone 411, so dass sogar 100% des aus der ersten Messzone 411 generierbaren Signals aus der ersten Steuermesszone 4111 am ersten Sensor 41 generiert werden, und somit erfindungsgemäss die Verkippung Δα stabilisierbar ist.

Der Versatz ΔY in axialer Richtung aus der Gleichgewichtslage G ist dabei nur ein momentaner Zustand, der hauptsächlich durch die Reluktanzkrafte im weiteren Betrieb automatisch wieder rückgängig gemacht wird, so dass sich der Rotor 3 in Bezug auf die axiale Richtung wieder in der Gleichgewichtslage G stabilisieren wird.

In den Fig. 5a bis Fig. 8b soll nochmals im Sinne dieser Anmeldung die Definition der ersten Messzone 411 und des aus der ersten Messzone generierbaren ersten Sensorsignals 410, sowie die erste Steuermesszone 4111 etwas detaillierter erläutert werden. Ausserdem wird der Zusammenhang der Messzonen 411, 4111 mit dem Raumwinkelbereich Ω, der sozusagen das Gesichtsfeld des Sensors symbolisiert, das heisst denjenigen Bereich angibt, aus dem der Senor 41 aufgrund seiner Konstruktion und seiner Anordnung prinzipiell in der Lage ist das Sensorsignal 410 zu empfangen, dargestellt. Darüber hinaus wird die Bedingung, dass mindestens 50% des aus der ersten Messzone 411 generierbaren ersten Sensorsignals 410 durch die erste Steuermesszone 4111 am ersten Sensor 41 generiert werden muss, zusätzlich anhand von schematischen Intensitätsverteilungen verdeutlicht.

Es versteht sich von selbst, dass diese Erläuterungen, die stellvertretend anhand der Messsituation betreffend den ersten Sensor 41 gegeben werden, und natürlich völlig analog auch für den zweiten Sensor 42 und jeden anderen, eventuell an der Rotationsmaschine 1 vorhandenen Sensor mit den zugeordneten Messzonen und Bereichen gelten.

Wenn im Folgenden der Begriff der Intensität eines Sensorsignals gebraucht wird, ist darunter das Integral, also die Summe des gesamten Messsignals aus der betreffenden Messzone zu verstehen.

In den Fig. 5a bis Fig. 8b ist jeweils schematisch im Schnitt ein Teil des Stators 2 und des Rotors 3 einer erfindungsgemässen Rotationsmaschine 1 zu sehen. Der Rotor 3 ist jeweils um die Versatzstrecke ΔY₀ in Richtung der Schwerkraft in Bezug auf die magnetische Statorebene 21 darstellungsgemäss nach unten versetzt. Ausser im Beispiel der Fig. 5a und 5b ist die magnetische Rotorachse 31 des Rotors 3 um eine mehr oder weniger stake Verkippung Δα gegen die magnetische Statorachse 21 verkippt. Der Sensor 41 ist nur beispielhaft darstellungsgemäss oberhalb der magnetischen Statorebene 21 angeordnet und könnte natürlich genauso gut auch unterhalb der magnetischen Statorebene 21 oder, z.B. wenn der Sensor 41 entsprechend geneigt ist und / oder eine genügend grosses Gesichtsfeld hat, sogar auf der magnetische Statorebene 21 angeordnet sein.

Der Sensor 41 kann dabei aufgrund seiner Konstruktion, der Anordnung am Stator 2 und dem Abstand zwischen Stator 2 und Rotor 3 im günstigsten Fall eine maximale Intensität Iₘₐₓ des am Rotor 3 generierbaren Sensorsignals 410 aufnehmen.

Der Rotor 3 gemäss Fig. 5a befindet sich in seiner Gleichgewichtslage G, d.h. er ist um die Versatzstrecke ΔY₀ in Bezug auf die magnetische Statorebene 21 versetzt und nicht verkippt. Der Sensor 41 ist so am Stator 2 angeordnet, dass der gesamte Raumwinkelbereich Ω, also der Bereich, aus dem der Sensor 41 überhaupt ein messbares Signal empfangen könnte, nur einen Bereich auf der Umfangsfläche 32 Rotor 3 abdeckt, und nicht einen Bereich oberhalb oder unterhalb des Rotors 3. Das heisst, der Sensor 41 blickt nicht über den Rand des Rotors 3.

In den Fig. 5b, 6b, 7b, und 8b ist jeweils ein Intensitätsdiagramm, bei welchem auf der Ordinatenachse eine Intensität I des Sensorsignals 410 aufgetragen ist, die der Sensor 41 bei dem jeweils zugeordneten Beispiel der Fig. 5a, 6a, 7a, 8a aus einem Bereich empfängt, der auf der Abszissenachse aufgetragen ist. Das heisst, die Höhe der Linie, die z.B. über der Koordinate 411 aufgetragen ist, gibt den prozentualen Anteil der maximalen Intensität Iₘₐₓ an, den der Sensor in dem zugeordneten Beispiel der darüber dargestellten Figur aus der ersten Messzone 411 erhält. Entsprechendes gilt für die Koordinate Ω, 4111 und [411-4111], die ebenfalls auf der Abszissenachse aufgetragen sind.

Ebenfalls eingezeichnet ist an der Ordinatenachse die Grenzintensität von 50% des aus der ersten Messzone 411 genierbaren ersten Sensorsignals 410, die im Diagramm an der Ordinatenachse mit 50% I₄₁₁ bezeichnet ist.

In Fall der Fig. 5a ist die vom Raumwinkelbereich Ω abgedeckte Fläche identisch mit der ersten Messzone 411 und diese ist wiederum identisch zur ersten Steuermesszone 4111.

Somit ist, wie der Fig. 5b zu entnehmen ist, die maximale Intensität Iₘₐₓ des am Rotor 3 generierbaren Sensorsignals 410 identisch zur tatsächlich generierten Intensität aus der erste Messzone 411. Da die erste Messzone 411 identisch zur ersten Steuermesszone 4111 ist, ist somit auch die Intensität aus der ersten Steuermesszone gleich der maximalen Intensität Iₘₐₓ, die maximal am Rotor 3 generierbar ist. Die Differenzintensität [411-4111] ist somit gleich null.

Trivialerweise ist in diesem Fall die Bedingung erfüllt, dass mindestens 50% des aus der ersten Messzone 411 generierbaren ersten Sensorsignals 410 durch die erste Steuermesszone 4111 am ersten Sensor 41 generiert ist, da im vorliegenden Fall sogar 100% des aus der ersten Messzone 411 generierbaren ersten Sensorsignals 410 durch die erste Steuermesszone 4111 am ersten Sensor 41 generiert wird.

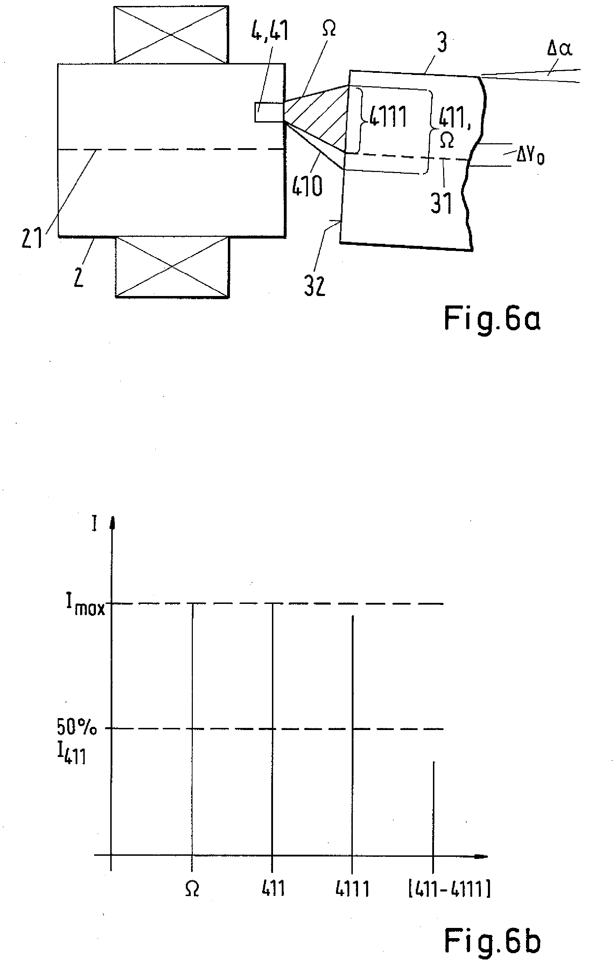

Der Rotor 3 gemäss Fig. 6a befindet sich zwar in Bezug auf seine axiale Position in seiner Gleichgewichtslage G, d.h. er ist um die Versatzstrecke ΔY₀ in Bezug auf die magnetische Statorebene 21 versetzt, ist jedoch um die Verkippung Δα gegen die magnetische Statorebene 21 verkippt. Der Sensor 41 ist ebenfalls so am Stator 2 angeordnet, dass der gesamte Raumwinkelbereich Ω, also der Bereich, aus dem der Sensor 41 überhaupt ein messbares Signal empfangen könnte, nur einen Bereich auf der Umfangsfläche 32 Rotor 3 abdeckt, und nicht einen Bereich oberhalb oder unterhalb des Rotors 3. Das heisst, der Sensor 41 blickt nicht über den Rand des Rotors 3.

Auch im Fall der Fig. 6a ist die vom Raumwinkelbereich Ω abgedeckte Fläche identisch mit der ersten Messzone 411. Die erste Messzone 411 ist jedoch nicht identisch zur ersten Steuermesszone 4111, da die Steuermesszone 4111 nur bis zur magnetischen Rotorachse 31 reicht, während die erste Messzone zwar grösstenteils oberhalb der magnetischen Rotorachse 31 liegt, jedoch auch mit einem kleinen Teil unterhalb.

Entsprechend unterscheidet sich das Intensitätsdiagramm der Fig. 6b von dem der Fig. 5b. Da der Sensor 41 nicht über den Rand des Rotors 3 blickt, empfängt der Sensor aus dem Raumwinkelbereich Ω bzw. aus der ersten Messzone 411 die maximal genierbare Signalintensität Iₘₐₓ. Da die erste Steuermesszone 4111 kleiner ist als die erste Messzone 411, wird, wie der Fig. 6b zu entnehmen ist, aus der ersten Steuermesszone am Sensor 41 eine Signalintensität generiert, die zwar immer noch grösser als 50% des aus der ersten Messzone 411 genierten Sensorsignals 410 ist, jedoch kleiner als das Sensorsignal 410 ist. Entsprechend verschwindet auch die Differenzintensität aus dem Bereich [411-4111] nicht.

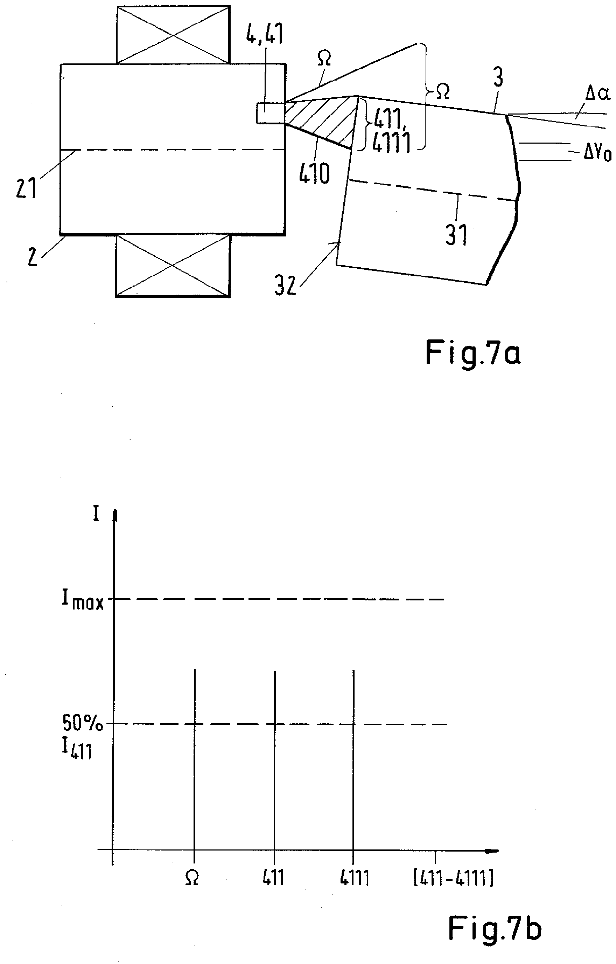

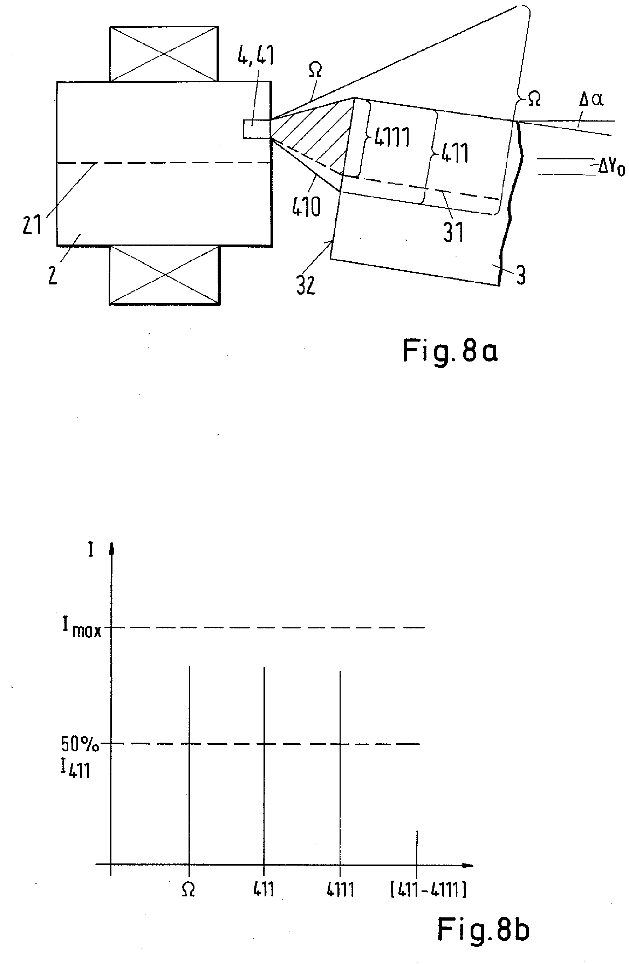

Bei den Beispielen der Fig. 7a und 8a blickt der Sensor 41 teilweise über den darstellungsgemäss oberen Rand des Rotors 3.

Im Beispiel der Fig. 7a liegt die erste Messzone 411 vollständig oberhalb der magnetischen Rotorebene 31 des Rotors 3 und die Messzone 411 ist folglich identisch mit der Steuermesszone 4111. Da der Sensor 41 jetzt über den Rotorrand hinausblickt, das heisst die vom Raumwinkelbereich Ω abgedeckte Fläche liegt nicht mehr vollständig auf der Umfangsfläche 32 des Rotors 3, ist auch die aus dem Raumwinkelbereich Ω am Sensor 41 empfangene Signalintensität I kleiner als die maximal mögliche Signalintensität Iₘₐₓ. Und da die von der ersten Messzone 411 und der ersten Steuermesszone 4111 gebildeten Flächen identisch sind, sind auch, wie der Fig. 7b zu entnehmen ist, die entsprechenden vom Sensor 41 gemessenen Intensitäten identisch und damit ist auch wieder die Differenzintensität [411-4111] identisch null. Der vom Raumwinkel Ω abgedeckte Bereich ist dabei im vorliegenden Beispiel grösser als die erste Messzone 411 und die erste Steuermesszone 4111, wobei jedoch die Intensität, die aus dem Raumwinkel Ω vom Sensor 41 registriert wird, identisch zur Intensität aus der ersten Messzone 411 und der ersten Steuermesszone 4111 ist.

Eine kompliziertere Signalverteilung ergibt die Sensoranordnung gemäss Fig. 8a.

Hier liegt die erste Messzone 411 nicht mehr vollständig oberhalb der magnetischen Rotorebene 31 des Rotors 3 und die Messzone 411 ist folglich auch nicht identisch mit der Steuermesszone 4111. Zusätzlich blickt der Sensor jetzt ebenfalls über den Rotorrand hinaus, das heisst die vom Raumwinkelbereich Ω abgedeckte Fläche liegt nicht mehr vollständig auf der Umfangsfläche 32 des Rotors 3. Daher ist auch die aus dem Raumwinkelbereich Ω am Sensor empfangene Signalintensität I kleiner als die maximal mögliche Signalintensität Iₘₐₓ. Die aus der ersten Messzone 411 am Sensor generierte Intensität ist folglich ebenfalls kleiner als die maximal generierbare Intensität Iₘₐₓ und gleich der Intensität aus dem Raumwinkelbereich Ω, da beide die gleichen Flächen am Rotor 3 abdecken. Die aus der ersten Steuermesszone 4111 generierte Intensität ist kleiner als die aus der ersten Messzone 411 genierte Intensität, da die erste Steuermesszone 4111 vollständig oberhalb der magnetischen Rotorebene 31 liegt, während die erste Messzone 411 teilweise auch darunter liegt. Damit ist die Differenzintensität [411-4111] auch nicht mehr identisch null.

Bei einem bevorzugten Ausführungsbeispiel einer erfindungsgemässen Rotationsmaschine wird bei einer Verkippung des Rotors über einen differenzierenden Anteil eines radialen Lagerreglers eine dämpfende Kraft auf eine verkippende Bewegung des Rotors bewirkt.

Dabei ist bei einem für die Praxis sehr wichtigen Ausführungsbeispiel mehr als 50% des aus der ersten Messzone generierbaren ersten Sensorsignals durch die erste Steuermesszone am ersten Sensor generierbar.

Besonders bevorzugt ist zur Bestimmung der Verkippung des Rotors gegenüber der magnetischen Statorebene eine zweite Steuermesszone, die ein Teil der zweiten Messzone ist, unterhalb oder oberhalb der magnetischen Rotorebene derart am Rotor vorgesehen, dass mindestens 50%, bevorzugt mehr als 50% des aus der zweiten Messzone generierbaren zweiten Sensorsignals durch die zweite Steuermesszone am zweiten Sensor generierbar ist.

Dabei sei an dieser Stelle darauf hingewiesen, dass der Fall, bei welchem im technischen Sinne genau 50% des aus der ersten und / oder zweiten Messzone generierbaren ersten und / oder zweiten Sensorsignals durch die erste Steuermesszone und / oder durch die zweite Steuermesszone am ersten und / oder am zweiten Sensor generierbar ist, durch die vorliegende Erfindung nur für den Fall abgedeckt ist, dass der Raumwinkelbereich, aus dem Sensor sein Signal empfangen kann, so gross ist, dass der Sensor gleichzeitig über den Rand und gleichzeitig unter den Rand des Rotors blickt. Alle anderen Fälle, bei welchen im technischen Sinne genau 50% des aus den Messzonen genierbaren Signals durch die entsprechende Steuermesszone am Sensor generierbar ist, können zu einer Destabilisierung des Sensors in Bezug auf eine Verkippung führen und sind somit von der vorliegenden Erfindung auch nicht erfasst.

D.h., in den meisten für die Praxis relevanten Fälle werden mehr als 50% des aus der Messzone genierbaren Signals durch die zugehörige Steuermesszone am Sensor generiert. Der im letzten Abschnitt geschilderte Ausnahmefall ist nur im Fall sehr grosser Sensoren relevant, die gleichzeitig über und unter den Rand des Rotors blicken.

Abhängig von der Art des verwendeten Sensors kann die erste Messzone und / oder die zweite Messzone z.B. ein Messvolumen oder aber auch eine Messfläche sein, z.B. bei einem Sensor, der auf einem Reflektionsprinzip beruht ist.

Bevorzugt ist die erste Steuermesszone und / oder die zweite Steuermesszone unterhalb der magnetischen Rotorebene angeordnet, so dass mindestens 55%, bevorzugt mindestens 70%, im Speziellen mindestens 90%, besonders bevorzugt mindestens 95% des aus der ersten Messzone generierbaren ersten Sensorsignals durch die erste Steuermesszone generierbar ist und / oder dass mindestens 55%, bevorzugt mindestens 70%, im Speziellen mindestens 90%, besonders bevorzugt mindestens 95% des aus der zweiten Messzone generierbaren zweiten Sensorsignals durch die zweite Steuermesszone generierbar ist.

Bei einem anderen erfindungsgemässen Ausführungsbeispiel ist mindestens 95%, bevorzugt mindestens 97%, im Speziellen mehr als 99% einer ersten maximalen Signalintensität durch die erste Messzone generierbar und / oder es ist mindestens 95%, bevorzugt mindestens 97%, im Speziellen mehr als 99% einer zweiten maximalen Signalintensität durch die zweite Messzone generierbar. Das heisst, bei diesem Beispiel liegen höchsten 5% des Raumwinkelbereichs, also des Blickfeldes des Sensors unterhalb des Rotorrands.

Bei einem anderen erfindungsgemässen Ausführungsbeispiel ist die erste Messzone und /oder die zweite Messzone oberhalb der magnetischen Rotorebene derart angeordnet, dass maximal 99%, bevorzugt höchstens 95%, im Speziellen höchstens 75%, unter anderem höchstens 30% der ersten und / oder der zweiten maximalen Signalintensität (Iₘₐₓ) durch die erste Messzone und / oder durch die zweite Messzone generierbar ist. Das heisst, bei diesem Ausführungsbeispiel, bei welchem die erste Messzone und / oder die zweite Messzone im wesentlichen oberhalb der magnetischen Rotorebene angeordnet ist, kommt es für einen gegen Verkippung stabilen Lauf des Rotors in erster Linie eigentlich nicht unbedingt darauf an, wieviel Steuermesszone im Vergleich zur Messzone zur Verfügung steht, sondern es ist wesentlich, dass der Sesnor über den Rotorrand hinausblickt.

In der Praxis werden häufig mehr als zwei Sensoren zum Einsatz kommen. So kann die Sensoreinrichtung der vorliegenden Erfindung mindestens drei Sensoren zur Bestimmung der Auslenkung des Rotors aus der Gleichgewichtslage umfassen, insbesondere können mindestens vier Sensoren, im Speziellen mindestens sechs, acht oder mehr Sensoren vorgesehen sein, wobei bevorzugt jeweils zwei Sensoren ein Sensorpaar bilden, die ein Summensignal oder ein Differenzsignal bereitstellen.

Wie bereits erwähnt kann der erste Sensor und / oder der zweite Sensor ein Volumensensor, insbesondere ein elektromagnetischer oder ein magnetischer Sensor, im speziellen ein induktiver Sensor, ein kapazitiver Sensor oder ein Wirbelstromsensor, und / oder ein optischer Sensor und / oder ein akustischer Sensor und / oder ein anderer geeigneter Sensor zur Bestimmung der Auslenkung des Rotors aus der Gleichgewichtslage sein.

Wie bereits erwähnt, ist im Betriebszustand die magnetische Rotorebene bei einer erfindungsgemässen Rotationsmaschine aufgrund der Masse des Rotors um eine Versatzstrecke in axialer Richtung in Bezug auf die magnetische Statorebene versetzt. Dabei ist die Versatzstrecke höchstens 40% oder höchstens 30% der axialen Höhe des Rotors, insbesondere zwischen 0.1 % und 20% der axialen Höhe des Rotors, und im Speziellen zwischen 1% und 10%, besonders bevorzugt 3% - 5% der axialen Höhe des Rotors.

Zur Auswertung der Sensorsignale und zur Steuerung und / oder Regelung der Gleichgewichtslage des Rotors kann eine Ansteuereinheit, umfassend eine elektronische Datenverarbeitungseinheit in an sich bekannter Weise vorgesehen sein.

Die Erfindung betrifft weiter ein Verfahren zur Bestimmung einer Verkippung eines Rotors einer Rotationsmaschine, welche Rotationsmaschine als lagerloser Motor ausgestaltet ist, umfassend einen als Lager- und Antriebsstator ausgestalteten Stator mit einer magnetischen Statorebene, wobei innerhalb des Stators der magnetische Rotor mit einer magnetischen Rotorebene im Betriebszustand magnetisch berührungslos gelagert wird. Dabei wird eine axiale Höhe des Rotors kleiner oder gleich einem halben Durchmesser des Rotors gewählt, und der Rotor wird in Bezug auf die magnetische Statorebene sowohl gegen eine axiale Verschiebung als auch gegen die Verkippung aus einer Gleichgewichtslage passiv durch Reluktanzkräfte stabilisiert. Am Stator wird eine Sensoreinrichtung mit einem ersten Sensor und einem zweiten Sensor vorgesehen, und zur Bestimmung einer Auslenkung des Rotors aus der Gleichgewichtslage wird ein erstes Sensorsignal aus einer ersten Messzone des Rotors mittels des ersten Sensors ausgewertet, und eine zweites Sensorsignal aus einer zweiten Messzone des Rotors mittels des zweiten Sensors ausgewertet. Erfindungsgemäss wird zur Bestimmung der Verkippung des Rotors gegen die magnetische Statorebene eine erste Steuermesszone, die ein Teil der ersten Messzone ist, unterhalb oder oberhalb der magnetischen Rotorebene derart am Rotor vorgesehen, dass mindestens 50% des aus der ersten Messzone generierten ersten Sensorsignals durch die erste Steuermesszone am ersten Sensor generiert wird.

Bei dem erfindungsgemässen Verfahren wird die Verkippung des Rotors bevorzugt über einen differenzierenden Anteil eines radialen Lagerreglers durch eine dämpfende Kraft auf eine verkippende Bewegung des Rotors rückgängig gemacht.

In der Praxis werden meistens mehr als 50% des aus der ersten Messzone generierten ersten Sensorsignals durch die erste Steuermesszone am ersten Sensor generiert.

Bei einem besonders bevorzugten Ausführungsbeispiel wird zur Bestimmung der Verkippung des Rotors gegenüber der magnetischen Statorebene eine zweite Steuermesszone, die ein Teil der zweiten Messzone ist, unterhalb oder oberhalb der magnetischen Rotorebene derart am Rotor vorgesehen, dass mindestens 50%, bevorzugt mehr als 50% des aus der zweiten Messzone generierten zweiten Sensorsignals durch die zweite Steuermesszone am zweiten Sensor generiert wird.

Dabei kann die erste Messzone und / oder die zweite Messzone ein Messvolumen sein und / oder die erste Messzone und / oder die zweite Messzone kann bei einem anderen Ausführungsbeispiel auch eine Messfläche sein.

In einem speziellen Ausführungsbeispiel des erfindungsgemässen Verfahrens wird die erste Steuermesszone unterhalb der magnetischen Rotorebene derart, dass mindestens 55%, bevorzugt mindestens 70%, im Speziellen mindestens 90%, besonders bevorzugt mindestens 95% des aus der ersten Messzone generierten ersten Sensorsignals durch die erste Steuermesszone generiert wird und / oder die zweite Steuermesszone wird derart unterhalb der magnetischen Rotorebene vorgesehen, dass mindestens 55%, bevorzugt mindestens 70%, im Speziellen mindestens 90%, besonders bevorzugt mindestens 95% des aus der zweiten Messzone generierten zweiten Sensorsignals durch die zweite Steuermesszone generiert wird.

Bei einem anderen für die Praxis wichtigen Ausführungsbeispiel wird mindestens 95%, bevorzugt mindestens 97%, im Speziellen mehr als 99% einer ersten maximalen Signalintensität Iₘₐₓ durch die erste Messzone generiert wird und / oder es werden mindestens 95%, bevorzugt mindestens 97%, im Speziellen mehr als 99% einer zweiten maximalen Signalintensität Iₘₐₓ durch die zweite Messzone generiert. Das bedeutet vereingfacht ausgedrückt, dass höchstens 5% des Raumwinkels, also höchstens 5% des Gesichtsfelds des Sensor unterhalb des Rotorrandes liegen.

Bein einem anderen, ebenfalls für die Praxis sehr wichtigen Ausführungsbeispiel wird die erste Messzone und /oder die zweite Messzone oberhalb der magnetischen Rotorebene derart angeordnet wird, dass maximal 99%, bevorzugt höchstens 95%, im Speziellen höchstens 75%, unter anderem höchstens 30% der ersten und / oder der zweiten maximalen Signalintensität Iₘₐₓ durch die erste Messzone und / oder durch die zweite Messzone generiert wird. Dass heisst, in dem Fall, dass die Messzone im wesentlichen oberhalb der magnetischen Rotorebene liegt, kommt es nicht so sehr darauf an, wie gross der Bereich der Steuermesszone ist. Es ist vielmehr wesentlich, dass ein Teil des Raumbereichs, d.h. des Blickfelds des Sensors oberhalb des Rotorrandes liegt, also der Sensor über den Rotorrand blickt.

In der Praxis werden zur Durchführung des erfindungsgemässen Verfahrens mindestens drei Sensoren zur Bestimmung der Auslenkung des Rotors aus der Gleichgewichtslage vorgesehen, insbesondere werden mindestens vier Sensoren, im Speziellen mindestens sechs, acht oder sogar mehr Sensoren vorgesehen sein.

Bevorzugt wird eine Summe des ersten Sensorsignals des ersten Sensors und des zweiten Sensorsignals des zweiten Sensors ausgewertet wird, und / oder es wird eine Differenz des ersten Sensorsignals des ersten Sensors und des zweiten Sensorsignals des zweiten Sensors ausgewertet.

Besonders bevorzugt wird als erster Sensor und / oder als zweiter Sensor ein Volumensensor, insbesondere ein elektromagnetischer oder magnetischer Sensor, im speziellen ein induktiver Sensor, ein kapazitiver Sensor oder ein Wirbelstromsensor, und / oder ein optischer Sensor und / oder ein akustischer Sensor und / oder ein anderer geeigneter Sensor zur Bestimmung der Auslenkung des Rotors aus der Gleichgewichtslage verwendet.

Wie bereits mehrmals erläutert, wird im Betriebszustand die magnetische Rotorebene aufgrund der Masse des Rotors um eine Versatzstrecke in axialer Richtung in Bezug auf die magnetische Statorebene versetzt, wobei die Versatzstrecke auf höchstens 40% oder höchstens 30% der axialen Höhe des Rotors, insbesondere zwischen 0.1 % und 20% der axialen Höhe des Rotors eingestellt wird, und im Speziellen zwischen 1% und 10% besonders bevorzugt zwischen 3% und 5% der axialen Höhe des Rotors eingestellt wird.

Zur Auswertung der Sensorsignale und zur Steuerung und / oder Regelung der Gleichgewichtslage des Rotors wird in an sich bekannter Weise eine Ansteuereinheit, umfassend eine elektronische Datenverarbeitungseinheit vorgesehen.

Je nach spezieller Anwendung, kann eine dämpfende Kraft auf die verkippende Bewegung des Rotors auch elektrisch, magnetisch, mechanisch, hydraulisch oder pneumatisch bewirkt werden, wie zum Beispiel unter anderem bei den bekannten Rotationsmaschinen, die als Pumpe in einem Medium mit gegebener Viskosität betrieben werden.

Die Erfindung betrifft weiter eine Bearbeitungsanlage, insbesondere eine Wafer-Bearbeitungsanlage, eine Bioreaktoranlage, Pumpe, Mischer oder eine andere Bearbeitungsanlage mit einer Rotationsmaschine gemäss der vorliegenden Erfindung, die nach einem erfindungsgemässen Verfahren betrieben wird.

Im Folgenden wird die Erfindung anhand von Ausführungsbeispielen unter Zuhilfenahme der Zeichnung sowohl in apparativer als auch in verfahrenstechnischer Hinsicht näher erläutert. Die schematische Zeichnung zeigt teilweise im Schnitt:
- Fig. 1:: eine erfindungsgemässe Rotationsmaschine mit Rotor in der Gleichgewichtslage;
- Fig. 2:: ein zweites Ausführungsbeispiel gemäss Fig. 1 mit Statormagnet und Rotormagnet;
- Fig. 3:: das Ausführungsbeispiel der Fig. 1 im Betriebszustand mit kleiner Verkippung des Rotors;
- Fig. 4:: das Ausführungsbeispiel der Fig. 1 im Betriebszustand mit grosser Verkippung des Rotors;
- Fig. 5a:: ein erster Betriebszustand einer erfindungsgemässen Rotationsmaschine;
- Fig. 5b:: eine Intensitätsverteilung für den Betriebszustand der Fig. 5a;
- Fig. 6a:: ein zweiter Betriebszustand einer erfindungsgemässen Rotationsmaschine;
- Fig. 6b:: eine Intensitätsverteilung für den Betriebszustand der Fig. 6a;
- Fig. 7a:: ein dritter Betriebszustand einer erfindungsgemässen Rotationsmaschine;
- Fig. 7b:: eine Intensitätsverteilung für den Betriebszustand der Fig. 7a;
- Fig. 8a:: ein vierter Betriebszustand einer erfindungsgemässen Rotationsmaschine;
- Fig. 8b:: eine Intensitätsverteilung für den Betriebszustand der Fig. 8a;
- Fig. 9a:: ein erstes erfindungsgemässes Ausführungsbeispiel mit Steuermesszone unterhalb der magnetischen Rotorebene;
- Fig. 9b:: ein zweites Ausführungsbeispiel gem. Fig. 9a;
- Fig. 9c:: ein drittes Ausführungsbeispiel gem. Fig. 9a;
- Fig. 10a:: ein erstes erfindungsgemässes Ausführungsbeispiel mit Steuermesszone oberhalb der magnetischen Rotorebene;
- Fig. 10b:: ein zweites Ausführungsbeispiel gem. Fig. 10a;

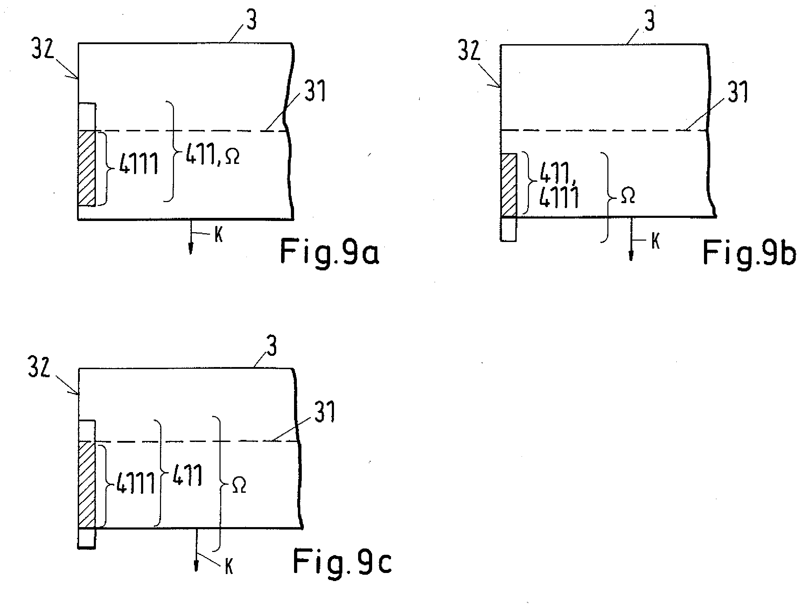

Die Fig. 1 bis Fig. 8b wurden bereits weiter oben eingehend beschrieben, so dass an dieser Stelle mit der Beschreibung der Fig. 9a bis Fig. 10b die Diskussion fortgesetzt werden kann.

Die Fig. 9a bis Fig. 10b zeigen zur Verdeutlichung einige wenige spezielle Ausführungsbeispiele der Erfindung, die zu einer Stabilisierung einer Verkippungsbewegung des Rotors im Betriebszustand führen. Aus Gründen der Übersichtlichkeit wurde auf die Darstellung des Stators 2 und des Sensors 41 verzichtet. Insbesondere auch deshalb, weil wie bereits eingehend erläutert, die Positionierung des Sensors im Grunde sekundär ist, da es wesentlich auf die Lage des Raumwinkelbereichs Ω, der Messzone 411 und der Steuermesszone 4111 ankommt.

Dabei ist in den Fig. 9a bis 10b der Raumwinkelbereich Ω, also das Gesichtsfeld des Sensors durch ein schmales Rechteck angrenzend an die Umfangsfläche 32 des Rotors 3 gekennzeichnet, wobei die Steuermesszone 4111 jeweils schraffiert ist.

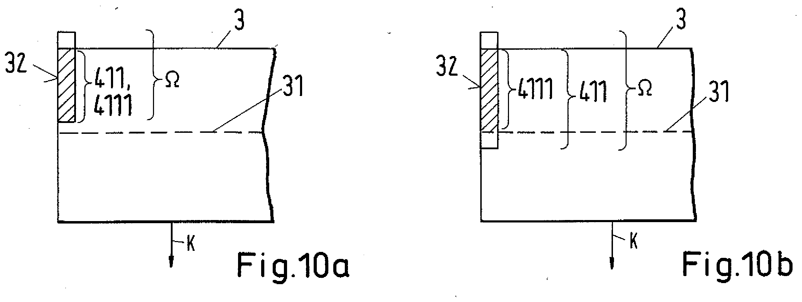

Die Fig. 9a bis 9c zeigen dabei exemplarisch Ausführungsbeispiele, bei welchen die Steuermesszone darstellungsgemäss unterhalb der magnetischen Rotorebene 31 liegt, während die Fig. 10a und 10b jeweils ein Beispiel zeigen, bei welchen die Steuermesszone oberhalb der magnetischen Rotorebene 31 liegt. Die Begriffe oben und unten sind dabei im üblichen Sinne in Bezug auf die Schwerkraft K gesehen, deren Richtung ebenfalls durch den mit K gekennzeichneten Pfeil angedeutet ist.

Bei dem erfindungsgemässen Ausführungsbeispiel der Fig. 9a liegt das Gesichtsfeld des Sensors 41, also der Raumwinkelbereich Ω vollständig auf der Umfangsfläche 32 des Rotors 3, wobei die Messzone 411 und die Steuermesszone 4111, die hier identisch sind, unterhalb der magnetischen Rotorebene liegen. Vorteilhaft erhält der Sensor 41 hier mindestens 55% der maximalen Signalintensität Iₘₐₓ aus der Steuermesszone 4111.

Auch die Anordnung gemäss Fig. 9b führt zu einer Stabilisierung einer Verkippung im Betriebszustand. Der Raumwinkelbereich Ω liegt hier vollständig unterhalb der magnetischen Rotorebene, wobei die Messzone 411 und die Steuermesszone 4111 wiederum identisch sind, der Sensor 41 jedoch ein wenig unter den Rotor 3 blickt. Bei dem Beispiel der Fig. 9b erhält der Sensor 41 bevorzugt mindestens 95% der maximalen Signalintensität Iₘₐₓ aus der Steuermesszone 4111.

Bei dem Ausführungsbeispiel gemäss Fig. 9c erstreckt sich der Raumwinkelbereich Ω von oberhalb der magnetischen Rotorachse 31 über den gesamten unteren Bereich der Umfangsfläche 32 bis unterhalb der Rotorkante. Der Sensor 41 blickt also auch hier etwas unter den Rotor. Auch bei diesem Ausführungsbeispiel empfängt der Sensor 41 bevorzugt mindestens 95% der maximalen Signalintensität Iₘₐₓ aus der Steuermesszone 4111.

Auch die Anordnung gemäss Fig. 10a führt zu einer Stabilisierung einer Verkippung im Betriebszustand. Der Raumwinkelbereich Ω liegt hier vollständig oberhalb der magnetischen Rotorebene, wobei die Messzone 411 und die Steuermesszone 4111 wiederum identisch sind, der Sensor 41 jedoch ein wenig über den Rotor 3 blickt. Bei dem Beispiel der Fig. 10a erhält der Sensor 41 bevorzugt höchstens 95% der maximalen Signalintensität Iₘₐₓ aus der Messzone 411.

Bei dem Ausführungsbeispiel gemäss Fig. 10b erstreckt sich der Raumwinkelbereich Ω von unterhalb der magnetischen Rotorachse 31 über den gesamten oberen Bereich der Umfangsfläche 32 bis oberhalb der Rotorkante. Der Sensor 41 blickt also auch hier etwas über den Rotor. Auch bei diesem Ausführungsbeispiel empfängt der Sensor 41 bevorzugt höchstens 95% der maximalen Signalintensität Iₘₐₓ aus der Messzone 411.

Es ist wichtig und interessant zu bemerken, dass das Verhalten der Regelung sich unterscheidet, je nach dem ob der Fall gemäss Fig. 9c oder gemäss Fig. 10b realisiert ist. Beiden Fällen ist gemeinsam, dass die Messzone 411 teils oberhalb und teils unterhalb der magnetischen Rotorebene 31 liegt, wobei der Raumwinkelbereich Ω jedoch nicht vollständig auf der Umfangsfläche 32 liegt, sondern der Sensor 41 zusätzlich noch entweder über den Rotorrand oder unter den Rotorrand blickt.

Rein geometrisch betrachten scheinen die Beispiele der Fig. 9c und 10b insofern symmetrisch zueinander zu sein, als dass die Fig. 9c im wesentlichen durch Spiegelung an der magnetischen Rotorachse 31 in die Fig. 10b übergeht, bzw. umgekehrt.

Funktionell unterscheiden sich die Ausführungsbeispiel der Fig. 9c und der Fig. 10b jedoch wesentlich.

Während zur Erreichung einer Stabilisierung einer Verkippungsbewegung beim Beispiel einer Anordnung gemäss Fig. 9c der Sensor bevorzugt mindestens 95% der maximalen Signalintensität Iₘₐₓ aus der Steuermesszone 4111 erhält, also nur ein wenig unterhalb des Rotors blicken darf, ist es bei einer Anordnung gemäss Fig. 10b genau umgekehrt. Hier empfängt der Sensor 41 bevorzugt höchstens 95% der maximalen Signalintensität Iₘₐₓ aus der Messzone 411, das heisst, Rotor läuft auch dann noch stabil, wenn der Sensor sehr weit über den Rotorrand blickt.

Es versteht sich, dass die in den Fig. 9a bis Fig. 10b Beispiele nicht abschliessend, sondern lediglich exemplarisch für weitere, von der Erfindung abgedeckte Ausführungsbeispiele zu verstehen sind.

## Patentansprüche

1. Rotationsmaschine, ausgestaltet als lagerloser Motor, umfassend einen als Lager- und Antriebsstator ausgestalteten Stator (2) mit einer magnetischen Statorebene (21), und einen innerhalb des Stators (2) magnetisch berührungslos gelagerten magnetischen Rotor (3) mit einer magnetischen Rotorebene (31), wobei eine axiale Höhe (H) des Rotors (3) kleiner oder gleich einem halben Durchmesser (D) des Rotors (3) ist, und der Rotor (3) in Bezug auf die magnetische Statorebene (21) sowohl gegen eine axiale Verschiebung (ΔY) als auch gegen eine Verkippung (Δα) aus einer Gleichgewichtslage (G) passiv durch Reluktanzkräfte stabilisiert ist, und am Stator (2) eine Sensoreinrichtung (4) mit einem ersten Sensor (41) und einem zweiten Sensor (42) derart vorgesehen ist, dass zur Bestimmung einer Auslenkung des Rotors (3) aus der Gleichgewichtslage (G) ein erstes Sensorsignal (410) aus einer ersten Messzone (411) des Rotors (3) mittels des ersten Sensors (41) und ein zweites Sensorsignal (420) aus einer zweiten Messzone (421) des Rotors (3) mittels des zweiten Sensors (42) auswertbar ist, **dadurch gekennzeichnet, dass** zur Bestimmung der Verkippung (Δα) des Rotors (3) gegen die magnetische Statorebene (21) eine erste Steuermesszone (4111), die ein Teil der ersten Messzone (411) ist, entweder unterhalb oder oberhalb der magnetischen Rotorebene (31) derart am Rotor (3) vorgesehen ist, dass mindestens 50% des aus der ersten Messzone (411) generierbaren ersten Sensorsignals (410) durch die erste Steuermesszone (4111) am ersten Sensor (41) generierbar ist.

2. Rotationsmaschine nach Anspruch 1, wobei eine Verkippung (Δα) des Rotors (3) über einen differenzierenden Anteil eines radialen Lagerreglers eine dämpfende Kraft auf eine verkippende Bewegung des Rotors (3) bewirkt.

3. Rotationsmaschine nach Anspruch 1 oder 2, wobei mehr als 50% des aus der ersten Messzone (411) generierbaren ersten Sensorsignals (410) durch die erste Steuermesszone (4111) am ersten Sensor (41) generierbar ist.

4. Rotationsmaschine nach einem der vorangehenden Ansprüche, wobei zur Bestimmung der Verkippung (Δα) des Rotors (3) gegenüber der magnetischen Statorebene (21) eine zweite Steuermesszone (4211), die ein Teil der zweiten Messzone (421) ist, unterhalb oder oberhalb der magnetischen Rotorebene (31) derart am Rotor (3) vorgesehen ist, dass mindestens 50%, bevorzugt mehr als 50% des aus der zweiten Messzone (421) generierbaren zweiten Sensorsignals (420) durch die zweite Steuermesszone (4211) am zweiten Sensor (42) generierbar ist.

5. Rotationsmaschine nach einem der vorangehenden Ansprüche, wobei die erste Messzone (411) und / oder die zweite Messzone (421) ein Messvolumen ist.

6. Rotationsmaschine nach einem der vorangehenden Ansprüche, wobei die erste Messzone (411) und /oder die zweite Messzone (421) eine Messfläche ist.

7. Rotationsmaschine nach einem der vorangehenden Ansprüche, wobei die erste Steuermesszone (4111) und / oder die zweite Steuermesszone (4211) unterhalb der magnetischen Rotorebene (31) angeordnet ist, so dass mindestens 55%, bevorzugt mindestens 70%, im Speziellen mindestens 90%, besonders bevorzugt mindestens 95% des aus der ersten Messzone (411) generierbaren ersten Sensorsignals (410) durch die erste Steuermesszone (4111) generierbar ist und / oder dass mindestens 55%, bevorzugt mindestens 70%, im Speziellen mindestens 90%, besonders bevorzugt mindestens 95% des aus der zweiten Messzone (421) generierbaren zweiten Sensorsignals (420) durch die zweite Steuermesszone (4211) generierbar ist.

8. Verfahren zur Bestimmung einer Verkippung (Δα) eines Rotors (3) einer Rotationsmaschine (1), welche Rotationsmaschine (1) als lagerloser Motor ausgestaltet ist, umfassend einen als Lager- und Antriebsstator ausgestalteten Stator (2) mit einer magnetischen Statorebene (21), wobei innerhalb des Stators (2) der magnetische Rotor (3) mit einer magnetischen Rotorebene (31) im Betriebszustand magnetisch berührungslos gelagert wird, wobei eine axiale Höhe (H) des Rotors (3) kleiner oder gleich einem halben Durchmesser (D) des Rotors (3) gewählt wird, und der Rotor (3) in Bezug auf die magnetische Statorebene (21) sowohl gegen eine axiale Verschiebung (ΔY) als auch gegen die Verkippung (Δα) aus einer Gleichgewichtslage (G) passiv durch Reluktanzkräfte stabilisiert wird, und am Stator (2) eine Sensoreinrichtung (4) mit einem ersten Sensor (41) und einem zweiten Sensor (42) vorgesehen wird, und zur Bestimmung einer Auslenkung des Rotors (3) aus der Gleichgewichtslage (G) ein erstes Sensorsignal (410) aus einer ersten Messzone (411) des Rotors (3) mittels des ersten Sensors (41) ausgewertet wird, und eine zweites Sensorsignal (420) aus einer zweiten Messzone (421) des Rotors (3) mittels des zweiten Sensors (42) ausgewertet wird, **dadurch gekennzeichnet, dass** zur Bestimmung der Verkippung (Δα) des Rotors (3) gegen die magnetische Statorebene (21) eine erste Steuermesszone (4111), die ein Teil der ersten Messzone (411) ist, unterhalb oder oberhalb der magnetischen Rotorebene (31) derart am Rotor (3) vorgesehen wird, dass mindestens 50% des aus der ersten Messzone (411) generierten ersten Sensorsignals (410) durch die erste Steuermesszone (4111) am ersten Sensor (41) generiert wird.

9. Verfahren nach Anspruch 8, wobei die Verkippung (Δα) des Rotors (3) über einen differenzierenden Anteil eines radialen Lagerreglers eine dämpfende Kraft auf eine verkippende Bewegung des Rotors (3) bewirkt.

10. Verfahren nach Anspruch 8 oder 9, wobei mehr als 50% des aus der ersten Messzone (411) generierten ersten Sensorsignals (410) durch die erste Steuermesszone (4111) am ersten Sensor (41) generiert wird.

11. Verfahren nach einem der Ansprüche 8 bis 10, wobei zur Bestimmung der Verkippung (Δα) des Rotors (3) gegenüber der magnetischen Statorebene (21) eine zweite Steuermesszone (4211), die ein Teil der zweiten Messzone (421) ist, unterhalb oder oberhalb der magnetischen Rotorebene (31) derart am Rotor (3) vorgesehen wird, dass mindestens 50%, bevorzugt mehr als 50% des aus der zweiten Messzone (421) generierten zweiten Sensorsignals (420) durch die zweite Steuermesszone (4211) am zweiten Sensor (42) generiert wird.

12. Verfahren nach einem der Ansprüche 8 bis 11, wobei die erste Messzone und / oder die zweite Messzone ein Messvolumen ist.

13. Verfahren nach einem der Ansprüche 8 bis 12, wobei die erste Messzone und / oder die zweite Messzone eine Messfläche ist.

14. Verfahren nach einem der Ansprüche 8 bis 13, wobei die erste Steuermesszone (4111) und / oder die zweite Steuermesszone (4211) unterhalb der magnetischen Rotorebene (31) angeordnet wird, so dass mindestens 55%, bevorzugt mindestens 70%, im Speziellen mindestens 90%, besonders bevorzugt mindestens 95% des aus der ersten Messzone (411) generierten ersten Sensorsignals (410) durch die erste Steuermesszone (4111) generiert wird und / oder dass mindestens 55%, bevorzugt mindestens 70%, im Speziellen mindestens 90%, besonders bevorzugt mindestens 95% des aus der zweiten Messzone (421) generierten zweiten Sensorsignals (420) durch die zweite Steuermesszone (4211) generiert wird.

15. Bearbeitungsanlage, insbesondere Wafer Bearbeitungsanlage, Bioreaktoranlage, Pumpe, Mischer oder eine andere Bearbeitungsanlage mit einer Rotationsmaschine (1) nach einem der Ansprüche 1 bis 7 betrieben nach einem Verfahren nach einem der Ansprüche 8 bis 14.

## Claims

1. A rotational machine adapted as a bearing-free engine including a stator (2) designed as a bearing and drive stator having a magnetic stator plane (21) and a magnetic rotor (3) having a magnetic rotor plane (21) and supported magnetically in contact free manner within the stator (2), wherein an axial height (H) of the rotor (3) is smaller than or equal to a half diameter (D) of the rotor (3) and the rotor (3) is stabilized passively by reluctance forces with respect to the magnetic stator plane (21) both against an axial displacement (ΔY) and also against a tilting (Δα) from an equilibrium position (G) and a sensor unit (4) having a first sensor (41) and a second sensor (42) is provided at the stator (2) such that for the determination of a deflection of the rotor (3) from the equilibrium position (G) a first sensor signal (410) from a first measurement zone (411) of the rotor (3) can be evaluated by means of the first sensor (41) and a second sensor signal (420) from a second measurement zone (421) can be evaluated by means of the second sensor (42), **characterized in that** for the determination of the tilting (Δα) of the rotor (3) relative to the magnetic stator plane (21) a first control measurement zone (4111) which is part of the first measurement zone (411) is provided either below or above the magnetic rotor plane (31) at the rotor (3) such that at least 50 % of the first sensor signal (410) which can be generated from the first measurement zone (411) can be generated by the first control measurement zone (4111) at the first sensor (41).

2. A rotational machine in accordance with claim 1, wherein the tilting (Δα) of the rotor (3) brings about a damping force on a tilting move-ment of the rotor (3) via a differentiating portion of a radial position regulator.

3. A rotational machine in accordance with claim 1 or claim 2, wherein more than 50 % of the first sensor signal (410) which is generated from the first measurement zone (411) is generated by the first control measurement zone (4111) at the first sensor (41).

4. A rotational machine in accordance with any one of the preceding claims, wherein for the determination of the tilting (Δα) of the rotor (3) with respect to the magnetic stator plane (21), a second control measurement zone (4211) which is a part of the second measurement zone (421) is provided below or above the magnetic rotor plane (31) of the rotor (3) at the rotor (3) such that at least 50%, preferably more than 50% of the second sensor signal (420) which can be generated from the second measurement zone (421) can be generated by the second control measurement zone (4211) at the second sensor (42).

5. A rotational machine in accordance with any one of the preceding claims, wherein the first measurement zone (411) and/or the second measurement zone (421) is a measurement volume.

6. A rotational machine in accordance with any one of the preceding claims, wherein the first measurement zone (411) and/or the second measurement zone (421) is a measurement area.

7. A rotational machine in accordance with any one of the preceding claims, wherein the first control measurement zone (4111) and/or the second control measurement zone (4211) is arranged below the magnetic stator plane (31) so that at least 55 %, preferably at least 70 %, in particular at least 90 % and particularly preferably at least 95 % of the first sensor signal (410) which can be generated from the first measurement zone (411) can be generated by the first control measurement zone (4111) and/or that at least 55 %, preferably at least 70 %, in particular at least 90 % and particularly preferably at least 95 % of the second sensor signal (420) which can be generated from the second measurement zone (421) can be generated by the second control measurement zone (4211).

8. A method for determining a tilting (Δα) of a rotor (3) of a rotational machine (1) which rotational machine is adapted as a bearing-free engine including a stator (2) designed as a bearing and drive stator having a magnetic stator plane (21) wherein a magnetic rotor (3) having a magnetic rotor plane (31) is stored magnetically in contact free manner within the stator (2) in the operational state, wherein an axial height (H) of the rotor (3) is selected smaller than or equal to a half diameter (D) of the rotor (3) and the rotor (3) is stabilized passively by reluctance forces with respect to the magnetic stator plane (21) both against an axial displacement (ΔY) and also against a tilting (Δα) from an equilibrium position (G) and a sensor unit (4) having a first sensor (41) and a second sensor (42) is provided at the stator (2) and for the determination of a deflection of the rotor (3) from the equilibrium position (G) a first sensor signal (410) from a first measurement zone (411) of the rotor (3) is evaluated by means of the first sensor (41) and a second sensor signal (420) from a second measurement zone (421) is evaluated by means of the second sensor (42), **characterized in that** for the determination of the tilting (Δα) of the rotor (3) relative to the magnetic stator plane (21) a first control measurement zone (4111) which is part of the first measurement zone (411) is provided either below or above the magnetic rotor plane (31) at the rotor (3) such that at least 50 % of the first sensor signal (410) generated from the first measurement zone (411) is generated by the first control measurement zone (4111) at the first sensor (41).

9. A method in accordance with claim 8, wherein the tilting (Δα) of the rotor (3) brings about a damping force on a tilting movement of the rotor (3) via a differentiating portion of a radial position regulator.

10. A method in accordance with claim 8 or claim 9, wherein more than 50 % of the first sensor signal (410) generated from the first measurement zone (411) is generated by the first control measurement zone (4111) at the first sensor (41).

11. A method in accordance with any one of claims 8 to 10, wherein for the determination of the tilting (Δα) of the rotor (3) with respect to the magnetic stator plane (21), a second control measurement zone (4211) which is a part of the second measurement zone (421) is provided below or above the magnetic rotor plane (31) of the rotor (3) at the rotor (3) such that at least 50%, preferably more than 50% of the second sensor signal (420) generated from the second measurement zone (421) is generated by the second control measurement zone (4211) at the second sensor (42)

12. A method in accordance with any one of claims 8 to 11, wherein the first measurement zone and/or the second measurement zone is a measurement volume.

13. A method in accordance with any one of claims 8 to 12, wherein the first measurement zone and/or the second measurement zone is a measurement area.

14. A method in accordance with any one of claims 8 to 13, wherein the first control measurement zone (4111) and/or the second control measurement zone (4211) is arranged below the magnetic stator plane (31) so that at least 55 %, preferably at least 70 %, in particular at least 90 % and particularly preferably at least 95 % of the first sensor signal (410) generated from the first measurement zone (411) is generated by the first control measurement zone (4111) and/or that at least 55 %, preferably at least 70 %, in particular at least 90 % and particularly preferably at least 95 % of the second sensor signal (420) generated from the second measurement zone (421) is generated by the second control measurement zone (4211).

15. A processing plant in particular a wafer processing plant, a biological reactor plant, a pump, a mixer or any other processing plant having a rotational machine (1) in accordance with any one of claims 1 to 7 and operated in accordance with a method in accordance with any one of claims 8 to 14.

## Revendications

1. Machine rotative, conçue sous la forme d'un moteur sans palier, comprenant un stator (2) réalisé sous la forme d'un stator de palier et d'entraînement ayant un plan de stator magnétique (21), et à l'intérieur du stator (2), un rotor magnétique (3) avec un plan de rotor magnétique (31) monté sans contact magnétique, dans lequel une hauteur axiale (H) du rotor (3) est inférieure ou égale à une moitié de diamètre (D) du rotor (3), et le rotor (3), par rapport au plan de stator magnétique (21) ainsi qu'à l'encontre d'un déplacement axial (ΔY) et aussi d'un basculement (Δα) à partir d'une position d'équilibre (G), est stabilisé passivement par des forces de réluctance, et un dispositif de détection (4) muni d'un premier capteur (41) et d'un second capteur (42) est prévu au niveau du stator (2) de telle sorte pour déterminer une déviation du rotor (3) à partir de la position d'équilibre (G), un premier signal de capteur (410) provenant d'une première zone de mesure (411) du rotor (3) au moyen du premier capteur (41) et un deuxième signal de capteur (420) provenant d'une deuxième zone de mesure (421) du rotor (3) au moyen du deuxième capteur (42) peuvent être évalués, **caractérisé en ce que** pour déterminer le basculement (Δα) du rotor (3) par rapport au plan de stator magnétique (21), une première zone de mesure de commande (4111), qui est une partie de la première zone de mesure (411), est prévue au-dessus ou au-dessous du plan de rotor magnétique (31) au niveau du rotor (3), et **en ce qu'**au moins 50 % du premier signal de capteur (410) pouvant être généré à partir de la première zone de mesure (411) peuvent être générés par la première zone de mesure de commande (4111) au niveau du premier capteur (41).

2. Machine rotative selon la revendication 1, dans laquelle un basculement (Δα) du rotor (3) entraîne une force d'amortissement sur un mouvement de basculement du rotor (3) via une partie de différenciation d'un régulateur de position radial.

3. Machine rotative selon la revendication 1 ou 2, dans laquelle plus de 50 % du premier signal de capteur (410) pouvant être généré à partir de la première zone de mesure (411) sont générés par la première zone de mesure de commande (4111) au niveau du premier capteur (41).

4. Machine rotative selon l'une quelconque des revendications précédentes, dans laquelle, pour la détermination de l'inclinaison (Δα) du rotor (3) par rapport au plan de stator magnétique (21), une deuxième zone de mesure de commande (4211), qui est une partie de la deuxième zone de mesure (421), est prévue au-dessous ou au-dessus du plan du rotor magnétique (31) au niveau du rotor (3), de sorte qu'au moins 50 %, de préférence plus de 50 % du deuxième signal de capteur (420) pouvant être généré à partir de la deuxième zone de mesure (421) peuvent être générés par la deuxième zone de mesure de commande (4211) au niveau du deuxième capteur (42).

5. Machine rotative selon l'une quelconque des revendications précédentes, dans laquelle la première zone de mesure (411) et/ou la deuxième zone de mesure (421) est/sont un volume de mesure.

6. Machine rotative selon l'une quelconque des revendications précédentes, dans laquelle la première zone de mesure (411) et/ou la deuxième zone de mesure (421) est/sont une surface de mesure.

7. Machine rotative selon l'une quelconque des revendications précédentes, dans laquelle la première zone de mesure de commande (4111) et/ou la deuxième zone de mesure de commande (4211) est agencée ou sont agencées au-dessous du plan du rotor magnétique (31) de telle sorte qu'au moins 55 %, de préférence au moins 70 %, en particulier au moins 90 %, de manière particulièrement préférée au moins 95 % du premier signal de capteur (410) pouvant être généré à partir de la première zone de mesure (411) peuvent être générés par la première zone de mesure de la commande (4111) et/ou qu'au moins 55 %, de préférence au moins 70 %, en particulier au moins 90 %, de manière particulièrement préférée au moins 95 % du deuxième signal de capteur (420) pouvant être généré à partir de la deuxième zone de mesure (421) peuvent être générés par la deuxième zone de mesure de commande (4211).

8. Procédé pour détermination un basculement (Δα) d'un rotor (3) d'une machine rotative (1), laquelle machine rotative (1) est conçue sous la forme d'un moteur sans palier, comprenant un stator (2) réalisé sous la forme d'un stator de palier et d'entraînement ayant un plan de stator magnétique (21), dans lequel le rotor magnétique (3) avec un plan de rotor magnétique (31) est monté sans contact magnétique à l'intérieur du stator (2), dans lequel une hauteur axiale (H) du rotor (3) est inférieure ou égale à une moitié de diamètre (D) du rotor (3), et le rotor (3), par rapport au plan de stator magnétique (21) ainsi qu'à l'encontre d'un déplacement axial (ΔY) et aussi d'un basculement (Δα) à partir d'une position d'équilibre (G), est stabilisé passivement par des forces de réluctance, et un dispositif de détection (4) muni d'un premier capteur (41) et d'un second capteur (42) est prévu au niveau du stator (2), et pour déterminer une déviation du rotor (3) à partir de la position d'équilibre (G), un premier signal de capteur (410) provenant d'une première zone de mesure (411) du rotor (3) au moyen du premier capteur (41) est évalué, et un deuxième signal de capteur (420) provenant d'une deuxième zone de mesure (421) du rotor (3) au moyen du deuxième capteur (42) est évalué, **caractérisé en ce que** pour déterminer le basculement (Δα) du rotor (3) par rapport au plan de stator magnétique (21), une première zone de mesure de commande (4111), qui est une partie de la première zone de mesure (411), est prévue au-dessus ou au-dessous du plan de rotor magnétique (31) au niveau du rotor (3), et **en ce qu'**au moins 50 % du premier signal de capteur (410) pouvant être généré à partir de la première zone de mesure (411) peuvent être générés par la première zone de mesure de commande (4111) au niveau du premier capteur (41).

9. Procédé selon la revendication 8, dans lequel le basculement (Δα) du rotor (3) entraîne une force d'amortissement sur un mouvement de basculement du rotor (3) via une partie de différenciation d'un régulateur de position radial.

10. Procédé selon la revendication 8 ou 9, dans lequel plus de 50 % du premier signal de capteur (410) pouvant être généré à partir de la première zone de mesure (411) sont générés par la première zone de mesure de commande (4111) au niveau du premier capteur (41).

11. Procédé selon l'une des revendications 8 à 10, dans lequel, pour la détermination de l'inclinaison (Δα) du rotor (3) par rapport au plan de stator magnétique (21), une deuxième zone de mesure de commande (4211), qui est une partie de la deuxième zone de mesure (421), est prévue au-dessous ou au-dessus du plan du rotor magnétique (31) au niveau du rotor (3), de sorte qu'au moins 50 %, de préférence plus de 50 % du deuxième signal de capteur (420) pouvant être généré à partir de la deuxième zone de mesure (421) peuvent être générés par la deuxième zone de mesure de commande (4211) au niveau du deuxième capteur (42).

12. Procédé selon l'une des revendications 8 à 11, dans lequel la première zone de mesure (411) et/ou la deuxième zone de mesure (421) est/sont un volume de mesure.

13. Procédé selon l'une quelconque des revendications 8 à 12, dans lequel la première zone de mesure (411) et/ou la deuxième zone de mesure (421) est/sont une surface de mesure.

14. Procédé selon l'une quelconque des revendications 8 à 13, dans lequel la première zone de mesure de commande (4111) et/ou la deuxième zone de mesure de commande (4211) est agencée ou sont agencées au-dessous du plan du rotor magnétique (31) de telle sorte qu'au moins 55 %, de préférence au moins 70 %, en particulier au moins 90 %, de manière particulièrement préférée au moins 95 % du premier signal de capteur (410) pouvant être généré à partir de la première zone de mesure (411) peuvent être générés par la première zone de mesure de la commande (4111) et/ou qu'au moins 55 %, de préférence au moins 70 %, en particulier au moins 90 %, de manière particulièrement préférée au moins 95 % du deuxième signal de capteur (420) pouvant être généré à partir de la deuxième zone de mesure (421) peuvent être générés par la deuxième zone de mesure de commande (4211).

15. Installation de traitement, en particulier, installation de traitement de plaquettes, installation de bioréacteur, pompe, mélangeur ou autre installation de traitement ayant une machine rotative (1) selon l'une quelconque des revendications 1 à 7, exploitée par un procédé selon l'une quelconque des revendications 8 à 14.
